(19) Europäisches Patentamt

European Patent Office

Office européen des brevets

(11) **EP 3 584 220 A1**

(12) **EUROPEAN PATENT APPLICATION**
published in accordance with Art. 153(4) EPC

(43) Date of publication:
**25.12.2019 Bulletin 2019/52**

(51) Int Cl.:
**C01B 33/42** $^{(2006.01)}$

(21) Application number: **17896595.0**

(86) International application number:
**PCT/JP2017/020092**

(22) Date of filing: **30.05.2017**

(87) International publication number:
**WO 2018/150600 (23.08.2018 Gazette 2018/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **14.02.2017 JP 2017025466**

(71) Applicants:
• **Topy Kogyo Kabushiki Kaisha**
  **Tokyo 141-8634 (JP)**
• **Shinshu University**
  **Matsumoto City, Nagano 390-8621 (JP)**

(72) Inventors:
• **SEIKE Ryuichi**
  **Toyohashi-shi**
  **Aichi 441-8510 (JP)**
• **HAYASHI Takayoshi**
  **Toyohashi-shi**
  **Aichi 441-8510 (JP)**
• **OKADA Tomohiko**
  **Nagano-shi**
  **Nagano 380-8553 (JP)**
• **SUEYOSHI Mai**
  **Toyohashi-shi**
  **Aichi 441-8510 (JP)**

(74) Representative: **Lippert Stachow Patentanwälte Rechtsanwälte Partnerschaft mbB Frankenforster Strasse 135-137 51427 Bergisch Gladbach (DE)**

(54) **SILICATE COATED ARTICLE AND METHOD FOR PRODUCING SAME**

(57) A silicate-coated body has a substrate, silica and/or a silica modified product adhered to a surface of the substrate, and a first silicate coating at least part of the substrate via the silica and/or the silica modified product.

[Fig. 3]

EP 3 584 220 A1

## Description

[Related Application]

This application is based upon and claims the benefit of the priority of Japanese Patent Application No. 2017-25466, filed on February 14, 2017, the disclosures of which is incorporated herein by reference in their entirety.

[Technical Field]

The present disclosure relates to a silicate-coated body and a method for manufacturing the same. The present disclosure relates especially to a powder (particles) coated with silicate and a method for manufacturing the same. The present disclosure relates, for example, to a powder (particles) coated with smectite silicate and a method for manufacturing the same.

[Background Art]

A smectite silicate has chemical stability and thermal stability. The smectite silicate is therefore used for various applications such as cosmetics, paint and metal ion adsorbents. For example, Patent Literature 1 discloses a method for synthesizing smectite clay minerals. However, since the smectite silicate produced by a method as described in Patent Literature 1 has a minute stratified shape, there is a disadvantage with its handleability. A technique for coating the surfaces of spherical silica particles with a smectite to improve the handleability has then been developed (for example, refer to Patent Literature 2 and Non-Patent Literature 1).

[Citation List]

[Patent Literature]

[Patent Literature 1] Japanese Unexamined Patent Publication H07-505112A
[Patent Literature 2] Japanese Unexamined Patent Publication No. 2014-24711A

[Non-Patent Literature 1] Tomohiko Okada et al., "Swellable Microsphere of a Layered Silicate Produced by Using Monodispersed Silica Particles," J. Phys. Chem. C, 2012, Vol. 116, p.21864-21869

[Summary of Invention]

[Technical Problem]

Since silicates such as smectite silicates have high chemical stability, chemical modification by silicates and/or chemical modification of silicates are/is difficult.. For example, it is not known that another silicate having high chemical stability (for example, mica) is modified with a smectite silicate at the particle level.
The form of a smectite in the smectite-coated silica particles synthesized based on methods described in Patent Literature 2 and Non-Patent Literature 1 depends on the shape and the size of spherical silica particles used as a substrate. The application of the smectite-coated silica particles has been therefore limited.
A smectite silicate having high flexibility in design is then desired to further extend the application of silicates such as smectite silicates.

[Solution to Problem]

According to a first aspect of the present disclosure, a silicate-coated body comprising a mica particle and a first silicate coating at least part of the mica particle is provided.
According to a second aspect of the present disclosure, a silicate-coated body is provided, the silicate-coated body comprising a substrate, silica and/or a silica modified product adhered to a surface of the substrate, and a first silicate coating at least part of the substrate via the silica and/or the silica modified product.
According to a third aspect of the present disclosure, a method for manufacturing a silicate-coated body is provided, the method comprising a mixing step of mixing a raw material which supplies constituent elements of a smectite silicate, a dissolving agent which dissolves at least part of the raw material and a substrate in a solvent to prepare a mixed liquid; a heating step of heat-treating the mixed liquid; and a cooling step of cooling the mixed liquid. The raw material comprises a silica powder. Particles in the silica powder are smaller than the substrate. The particles are adherable to a surface of the substrate.

[Advantageous Effects of Invention]

According to the present disclosure, the handleability of a first silicate can be enhanced. The applicability of the first silicate can be enhanced as compared with the first silicate alone.

According to the present disclosure, the functions of a substrate and/or the first silicate can be adjusted, extended and/or improved by mutually using the functions of the substrate and the first silicate.

According to the present disclosure, even when the first silicate is difficult to adhere to the substrate directly for material reasons, the substrate can be coated with the first silicate. The flexibility in design of the first silicate is therefore enhanced, and its application can be extended.

[Brief Description of the Drawings]

[Figure 1] Figure 1 shows a schematic sectional view of a silicate-coated body according to a second embodiment of the present disclosure.

[Figure 2] Figure 2 shows a schematic sectional view of a silicate-coated body according to a second embodiment of the present disclosure.

[Figure 3] Figure 3 shows a schematic diagram for describing the constitution and the generation mechanism of the silicate-coated body according to the second embodiment of the present disclosure.

[Figure 4] Figure 4 shows a flow chart of a method for manufacturing a silicate-coated body according to a third embodiment.

[Figure 5] Figure 5 shows a conceptual drawing of a silicate-coated body according to a fourth embodiment of the present disclosure.

[Figure 6] Figure 6 shows a conceptual drawing of a silicate-coated body according to a fourth embodiment of the present disclosure.

[Figure 7] Figure 7 shows a flow chart of a method for manufacturing a silicate-coated body according to a fifth embodiment.

[Figure 8] Figure 8 shows X-ray diffraction patterns of hectorite-coated bodies according to Test Examples 1-6.

[Figure 9] Figure 9 shows an X-ray diffraction pattern of hectorite-coated mica according to Test Example 1.

[Figure 10] Figure 10 shows an X-ray diffraction pattern of hectorite-coated mica according to Test Example 1 and hectorite in the range of $2\theta = 2°$ to $12°$.

[Figure 11] Figure 11 shows an X-ray diffraction pattern of hectorite-coated mica according to Test Example 2 and hectorite in the range of $2\theta = 2°$ to $12°$.

[Figure 12] Figure 12 shows an X-ray diffraction pattern of hectorite-coated mica according to Test Example 3 and hectorite in the range of $2\theta = 2°$ to $12°$.

[Figure 13] Figure 13 shows an X-ray diffraction pattern of hectorite-coated mica according to Test Example 4 and hectorite in the range of $2\theta = 2°$ to $12°$.

[Figure 14] Figure 14 shows an X-ray diffraction pattern of hectorite-coated mica according to Test Example 5 and hectorite in the range of $2\theta = 2°$ to $12°$.

[Figure 15] Figure 15 shows an X-ray diffraction pattern of hectorite-coated mica according to Test Example 6 and hectorite in the range of $2\theta = 2°$ to $12°$.

[Figure 16] Figure 16 shows an X-ray diffraction pattern of synthetic mica.

[Figure 17] Figure 17 shows an X-ray diffraction pattern of hectorite.

[Figure 18] Figure 18 shows an SEM image of hectorite-coated mica according to Test Example 1.

[Figure 19] Figure 19 shows an SEM image of hectorite-coated mica according to Test Example 1.

[Figure 20] Figure 20 shows an SEM image of hectorite-coated mica according to Test Example 1.

[Figure 21] Figure 21 shows an SEM image of hectorite-coated mica according to Test Example 2.

[Figure 22] Figure 22 shows an SEM image of hectorite-coated mica according to Test Example 2.

[Figure 23] Figure 23 shows an SEM image of hectorite-coated mica according to Test Example 2.

[Figure 24] Figure 24 shows an SEM image of hectorite-coated mica according to Test Example 3.

[Figure 25] Figure 25 shows an SEM image of hectorite-coated mica according to Test Example 3.

[Figure 26] Figure 26 shows an SEM image of hectorite-coated mica according to Test Example 3.

[Figure 27] Figure 27 shows an SEM image of hectorite-coated mica according to Test Example 4.

[Figure 28] Figure 28 shows an SEM image of hectorite-coated mica according to Test Example 4.
[Figure 29] Figure 29 shows an SEM image of hectorite-coated mica according to Test Example 4.
[Figure 30] Figure 30 shows an SEM image of hectorite-coated mica according to Test Example 5.
[Figure 31] Figure 31 shows an SEM image of hectorite-coated mica according to Test Example 5.
[Figure 32] Figure 32 shows an SEM image of hectorite-coated mica according to Test Example 5.
[Figure 33] Figure 33 shows an SEM image of synthetic mica.
[Figure 34] Figure 34 shows an SEM image of synthetic mica.
[Figure 35] Figure 35 shows an SEM image of synthetic mica.
[Figure 36] Figure 36 shows an approximate straight line obtained in Test Example 5.
[Figure 37] Figure 37 shows a theoretical curve of an adsorption isotherm obtained in Test Example 5.
[Figure 38] Figure 38 shows photographs showing a state in which a product of Test Example is immersed in an aqueous methylene blue solution and a photograph of powder separated after the immersion.
[Figure 39] Figure 39 shows an SEM image of a treated product in Test Example 7.
[Figure 40] Figure 40 shows an SEM image of a treated product in Test Example 7.
[Figure 41] Figure 41 shows an SEM image of a treated product in Test Example 8.
[Figure 42] Figure 42 shows an SEM image of a treated product in Test Example 8.
[Figure 43] Figure 43 shows a photograph of a colored silicate-coated body according to Test Example 9.
[Figure 44] Figure 44 shows a photograph of a colored silicate-coated body according to Test Example 10.
[Figure 45] Figure 45 shows a photograph of a colored silicate-coated body according to Test Example 11.
[Figure 46] Figure 46 shows a photograph of a colored silicate-coated body according to Test Example 12.
[Figure 47] Figure 47 shows a photograph of a colored silicate-coated body according to Test Example 13.
[Figure 48] Figure 48 shows a photograph of a colored silicate-coated body according to Test Example 14.
[Figure 49] Figure 49 shows a photograph of states in which mixed liquids before centrifugal separation dehydration in a coloring process of Test Example 14 and Comparative Example are left to stand.

[Description of Embodiments]

Preferred modes according to the aforementioned aspects of the disclosure are described below.
According to a preferred mode of the first aspect, the first silicate is bonded to the mica particle via silica and/or a silica modified product.
According to a preferred mode of the first aspect, a median particle size of the mica particle is 0.1 $\mu$m to 10 mm.
According to a preferred mode of the second aspect, the substrate comprises a second silicate particle.
According to a preferred mode of the second aspect, the substrate is flaky and/or plate-like mica powder.
According to a preferred mode of the second aspect, the first silicate is integrated with the silica and/or the silica modified product.
According to a preferred mode of the second aspect, the first silicate comprises a smectite silicate.
According to a preferred mode of the second aspect, the smectite silicate comprises hectorite.
According to a preferred mode of the first and second aspects, the silicate-coated body further comprises an ionic organic coloring matter.
According to a preferred mode of the first and second aspects, the ionic organic coloring matter is adsorbed in the first silicate.
According to a preferred mode of the first and second aspects, the ionic organic coloring matter is at least one selected from the group consisting of methylene blue, rhodamine B, erythrosine B, tartrazine, sunset yellow FCF and brilliant blue FCF.
According to a preferred mode of the first and second aspects, the silicate-coated body further comprises a multivalent cation. The ionic organic coloring matter comprises an anionic organic coloring matter.
According to a preferred mode of the first and second aspects, the multivalent cation is at least one selected from the group consisting of a magnesium ion, a calcium ion, an aluminum ion and a barium ion.
According to a preferred mode of the third aspect, the silica powder is 0.02 parts by mass to 0.7 parts by mass based on 1 part by mass of the substrate in the mixing step.
According to a preferred mode of the third aspect, a median particle size of the substrate is 10 or more, assuming that an average particle size of the particles is 1.
According to a preferred mode of the third aspect, the substrate comprises at least one selected from the group consisting of mica, talc, alumina and glass.
According to a preferred mode of the third aspect, the solvent is water. The heat treatment of the mixed liquid is performed under a pressurized condition.
According to a preferred mode of the third aspect, the smectite silicate comprises hectorite
According to a preferred mode of the third aspect, the dissolving agent comprises a compound which dissolves a surface portion of the silica powder.

According to a preferred mode of the third aspect, the raw material comprises a magnesium-containing compound and a lithium-containing compound. The dissolving agent comprises urea.

According to a preferred mode of the third aspect, the method further comprises an addition step of adding the silicate-coated body and an ionic organic coloring matter to an aqueous solvent containing water.

According to a preferred mode of the third aspect, a salt is further added when the ionic organic coloring matter comprises an anionic organic coloring matter. The salt electrolytically dissociates a multivalent cation in the aqueous solvent.

According to a preferred mode of the third aspect, the salt is at least one selected from the group consisting of calcium chloride, magnesium chloride, aluminium chloride hydrate and barium chloride.

According to a preferred mode of the third aspect, the ionic organic coloring matter is at least one selected from the group consisting of methylene blue, rhodamine B, erythrosine B, tartrazine, sunset yellow FCF and brilliant blue FCF.

In the following description, reference numerals in the drawings are given for the understanding of the invention and are not intended to limit the invention to the aspects shown. The drawings are given for helping to understand a silicate-coated body of the present disclosure, and are not intended to limit the silicate-coated body to aspects of the drawings such as illustrated shapes, dimensions and scales. In each embodiment, the same reference numerals are given to the same components.

A silicate-coated body according to a first embodiment of the present disclosure will be described.

The silicate-coated body of the present disclosure has a substrate and a first silicate coating at least a part of the substrate.

The substrate can preferably resist production conditions for producing a first silicate. The substrate is preferably a material to which the below-mentioned adhesive agent is adherable physically and/or chemically. The substrate preferably has a size such that the substrate can be placed in a reaction vessel for producing the first silicate. The substrate can take the form of powder.

When the substrate is powder, substrate particles can take a shape such as a spherical shape, an ellipsoidal (spheroidal) shape, a flaky shape, a plate-like shape and an indefinite shape. The size of the substrate particles is preferably larger than that of the below-mentioned adhesive agent. The size of the substrate particles may be 0.1 $\mu$m or greater, 2 $\mu$m or greater, 5 $\mu$m or greater, and 7 $\mu$m or greater. The size of the substrate particles may be 10 mm or smaller, 1 mm or smaller, 500 $\mu$m or smaller, 200 $\mu$m or smaller, 100 $\mu$m or smaller, 50 $\mu$m or smaller, 40 $\mu$m or smaller, 30 $\mu$m or smaller, and 25 $\mu$m or smaller. The size of the substrate particles is preferably a median particle size (the median of particle sizes). The median particle size can be measured, for example, by laser diffraction particle size distribution measurement.

When the substrate particles are in a flaky shape or a plate-like shape, the average thickness of the substrate particles may be 0.05 $\mu$m or thicker, 0.1 $\mu$m or thicker, and 0.3 $\mu$m or thicker. The average thickness of the substrate particles may be 2 $\mu$m or thinner, 1 $\mu$m or thinner, 0.5 $\mu$m or thinner, and 0.3 $\mu$m or thinner. Although methods for measuring the average thickness are not particularly limited, for example, the thicknesses of an arbitrary number of particles are measured by the inclined observation of an electron microscope, and the average thickness may be calculated as the average value thereof.

The aspect ratio of the substrate particles (median particle size/average thickness) may be 10 or more, preferably 50 or more, and more preferably 70 or more. The aspect ratio of the substrate particles may be 150 or less, preferably 100 or less, and more preferably 90 or less. Although methods for determining the aspect ratio are not particularly limited, for example, the particle sizes and thicknesses of an arbitrary number of particles determined by the inclined observation of the electron microscope are measured, and the aspect ratio may be calculated by dividing the value of the obtained median particle size by the value of the average thickness.

Examples of the substrate may include a second silicate, aluminum oxide (alumina) and glass. The second silicate may be a layered(stratified) silicate different from the first silicate. The second silicate preferably does not have swelling property in water. Examples of the second silicate may include mica (isinglass) and talc.

Mica which can be used as a substrate will be described in detail. Mica may be natural mica and/or synthetic mica. It is preferred to use synthetic mica from the viewpoint of chemical stability, little impurities, and the smoothness of planes. Examples of the synthetic mica may include potassium phlogopite [$KMg_3(AlSi_3O_{10})F_2$], potassium tetrasilicon mica [$KMg_{2\ 1/2}(Si_4O_{10})F_2$], potassium taeniolite [$KMg_2Li(Si_4O_{10})F_2$], sodium phlogopite [$NaMg_3(AlSi_3O_{10})F_2$], sodium taeniolite [$NaMg_2Li(Si_4O_{10})F_2$], sodium tetrasilicon mica [$NaMg_{2\ 1/2}(Si_4O_{10})F_2$], and sodium hectorite [$Na_{1/3}Mg_{2\ 2/3}Li_{1/3}(Si_4O_{10})F_2$].

Synthetic mica obtained by any production method such as a melting method, a hydrothermal method or a solid-solid reaction method may be used. For example, compounds containing potassium, sodium, magnesium, aluminum, silicon, fluorine and the like are mixed at a fixed ratio, the mixture is melted, crystallized, cooled, then mechanically pulverized, heat-treated, washed with water and dried, and synthetic mica powder can be obtained. For example, in the case of synthetic fluorophlogopite (potassium phlogopite), silicic acid anhydride, magnesium oxide, aluminum oxide and potassium silicofluoride are weighed and mixed so that the mixture has the above composition, the mixture is then melted at 1,400 to 1,500°C and cooled to room temperature, and synthetic fluorophlogopite can be obtained. If lump of the obtained synthetic fluorophlogopite is pulverized and classified as needed, synthetic mica powder can be obtained.

The first silicate may coat part of the substrate and may coat the whole substrate. The first silicate may contain smectite silicate. The smectite silicate may be, for example, hectorite. The ideal composition of hectorite can be expressed as $[Li_x(Mg_{6-x}Li_xSi_8O_{20}(OH)_4 \cdot nH_2O)]$.

The thickness of the first silicate on the surface of the substrate may be 5 nm or thicker, and preferably 10 nm or thicker. The thickness of the first silicate on the surface of the substrate may be 100 nm or thinner, and preferably 50 nm or thinner. The thickness of the first silicate can be confirmed with a transmission electron microscope (TEM).

The content of the first silicate in the silicate-coated body may be 10% by mass or more, or 15% by mass or more based on the mass of the silicate-coated body. The content of the first silicate may be 30% by mass or less, or 25% by mass or less based on the mass of the silicate-coated body.

The content of the first silicate in the silicate-coated body can be calculated, for example, from the Langmuir adsorption isotherm. The Langmuir adsorption isotherm can be expressed as Expression 1. In Expression 1, q: the amount of adsorbed coloring matter, $q_m$: the maximum amount of adsorbed coloring matter (saturated amount adsorbed), K: equilibrium constant and C: concentration of added coloring matter (equilibrium concentration). First, the certain amount (for example, x grams) of the first silicate (for example, hectorite) and a coloring matter (for example, methylene blue) are mixed in water, and the amount q of the adsorbed coloring matter based on the first silicate in the supernatant liquid is calculated. This is repeated with the amount C of the added coloring matter changed, and the amounts q of the adsorbed coloring matter based on the amounts C of the added coloring matter are determined. Expression 1 can be changed to Expression 2. According to Expression 2, measured values are plotted with the axis of abscissas showing the amount C of the added coloring matter and the axis of ordinates showing the added amount/adsorbed amount C/q of the coloring matter, and the first maximum amount $q_m$ of the adsorbed coloring matter in the first silicate and the first equilibrium coefficient K are calculated from the slope ($1/q_m$) and the intercept ($1/q_mK$). Next, the amount C of the added coloring matter and the amount q of the adsorbed coloring matter are measured as to a certain amount (for example, x grams) of the silicate-coated body of the present disclosure (namely, the first silicate contained in the silicate-coated body) instead of the first silicate in the same way. The second maximum amount $q_m$ of the adsorbed coloring matter and the second equilibrium coefficient K are calculated. The content of the first silicate in the silicate-coated body can be calculated by comparing the first maximum amount $q_m$ of the adsorbed coloring matter with the second maximum amount $q_m$ of the adsorbed coloring matter.

[Expression 1]

$$q = \frac{q_m \cdot K \cdot C}{1 + K \cdot C}$$

[Expression 2]

$$\frac{C}{q} = \frac{1}{q_m} \cdot C + \frac{1}{q_m \cdot K}$$

The first silicate can be synthesized on the surface of the substrate as shown in the below-mentioned manufacturing method. When the composition, the constitution, properties or the like of the first silicate cannot be directly specified, these can be specified based on the manufacturing method.

Even though the first silicate alone is minute, for example, like hectorite, the first silicate can be handled at the size of the substrate while exhibiting the effect of the first silicate on the surface, and the ease of handling can be enhanced according to the silicate-coated body according to the first embodiment.

According to the silicate-coated body according to the first embodiment, the surface area can be enlarged as compared with that of the first silicate alone by selecting a substrate. For example, when the silicate-coated body is used as a cationic adsorbent, the adsorption efficiency can therefore be enhanced as compared with that of the first silicate alone. The silicate-coated body is easily collected after the silicate-coated body adsorbs an object.

According to the silicate-coated body according to the first embodiment, the shape of the first silicate can be diversified by selecting a substrate. For example, when a substrate in a plate-like shape or a flaky shape is selected, the first silicate can also be substantially used in the form of a plate or a flake.

According to the silicate-coated body according to the first embodiment, a silicate-coated body having both the functions of the first silicate and those of the substrate can be obtained. Alternatively, the function of the substrate can be adjusted or improved with the first silicate. Hectorite-coated mica powder in which the substrate is phlogopite powder, and the first silicate is hectorite will be mentioned as an example and described.

In hectorite-coated mica powder, cation exchangeability which phlogopite alone cannot achieve can be imparted to phlogopite. Hectorite-coated mica powder can adsorb, for example, a different type of metal cation, organic matter cation and metal oxide. The use of this function enables the color tone of phlogopite to be changed if the cations are coloring ions and new functions to be imparted to phlogopite if the cations are functional ions. The utilization of this function enables utilization as a colored plate-like pigment and functional plate-like powder in cosmetic applications and industrial applications. As an aspect of functionality to be imparted, for example, by substituting an ion in hectorite with a different type of a metal cation or a metal oxide, a film having a different refractive index can be generated on the surface of phlogopite to impart designing ability and the like. By substituting the ion with a zinc ion, silver ion and the like, antibacterial properties and the like can be imparted. Meanwhile, by coating phlogopite with hectorite, the volume and the specific surface area can be increased as compared with those of phlogopite alone to increase the oil absorptivity. By incresing the oil absorptivity, smearing makeup by sebum can be suppressed, and oily components added to cosmetics can be increased.. By coating phlogopite with hectorite to change the properties and condition of the surface of the powder, light reflectivity/diffusibility can be adjusted.

When hectorite-coated mica powder is used for a film (for example, gas barrier film), for example, as a nanocomposite material, by increasing the surface area of mica particles with hectorite, mechanical properties such as close adhesion to a film, a barrier property and tensile strength; and the like can be enhanced.

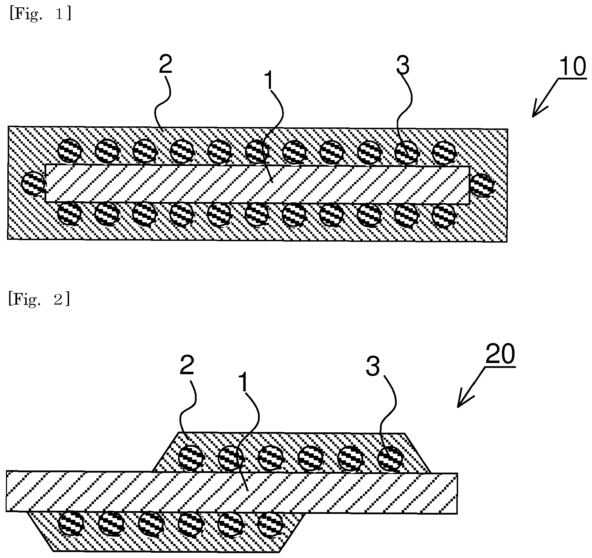

A silicate-coated body according to a second embodiment of the present disclosure will be described. Figure 1 and Figure 2 show schematic sectional views of silicate-coated bodies according to the second embodiment.

Silicate-coated bodies 10 and 20 of the present disclosure further have an adhesive agent 3 in addition to a substrate 1 and a first silicate 2 in the first embodiment. The adhesive agent 3 may exist on the substrate 1. The first silicate 2 may coat the substrate 1 via the adhesive agent 3. The first silicate 2 may exist along arrangement of the adhesive agent 3. The adhesive agent 3 can preferably adhere the first silicate 2 to the substrate 1. The adhesive agent 3 is preferably a raw material for synthesizing the first silicate. The first silicate 2 is preferably formed integrally with the adhesive agent 3.

The adhesive agent 3 is preferably, for example, silica and/or a silica modified product. The silica and/or silica modified product may also include a compound in which a surface of silica is modified. The silica modified product may also include compounds derived from silica, compounds generated from silica in a reaction process, and the like. The silica and/or silica modified product will be simply referred to as "silica" hereinafter.

Silica preferably takes the form of powder. A silica particle is preferably smaller than a substrate so that it can adhere to the surface of the substrate. The average particle size of silica particles is preferably 50 nm or smaller, more preferably 30 nm or smaller, and further preferably 20 nm or smaller. It is considered that when the average particle size is greater than 50 nm, silica is hard to adhere to the surface of the substrate, and thus hectorite is hard to be produced on the surface of the substrate.

With respect to the ratio of the size of the silica particle to the size of the substrate, the median particle size of the substrate is 10 or higher, preferably 50 or higher, and more preferably 100 or higher, assuming that the average particle size of the silica particles is 1. It is because when the silica particles are relatively larger than the substrate, the number of silica particles adhered to the substrate decreases, and thus the amount of the coating of the first silicate decreases.

The silicate-coated body according to the second embodiment can also have the same effect as the silicate-coated body according to the first embodiment. The existence of the adhesive agent enables enhancement of the joining ability between the first silicate and the substrate.

Some characteristics other than the above in the silicate-coated body of the present disclosure are difficult to directly specify by the structure or the properties of the silicate-coated body of the present disclosure. In that case, it is useful to specify the characteristics by the below-mentioned manufacturing method. For example, when the form, the composition, the existence, the distribution, the content and the like of the adhesive agent cannot be directly specified, it is useful to specify these by the below-mentioned manufacturing method.

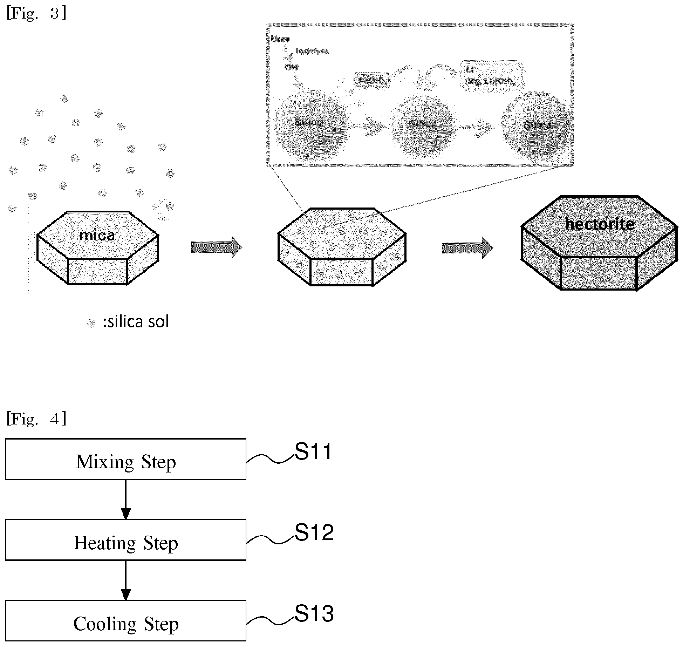

As a third embodiment of the present disclosure, a method for manufacturing the silicate-coated body according to the first and second embodiments will be described. Figure 3 shows a schematic diagram for describing the structure and the production mechanism of a silicate-coated body according to the second embodiment. The method described below is one aspect, and the method for manufacturing the silicate-coated body of the present disclosure is not limited to the following manufacturing method. The reaction mechanism included in the following description is complementary, and it is not intended to limit the manufacturing method of the present disclosure. That is, even if it is proved that an actual reaction mechanism differs from the below-mentioned mechanism, it does not influence the following manufacturing method.

Figure 4 shows a flow chart of the manufacturing method according to the third embodiment.

A mixed liquid in which a raw material containing elements constituting a first silicate, a dissolving agent which dissolves at least part of the raw material, and a substrate are added to a solvent is prepared (S11; mixing step). As the solvent, for example, water may be used. It is preferred to apply ultrasonic waves to the mixed liquid to disperse additives in the solvent.

As the substrate, the substrate described in the first embodiment may be used. The substrate preferably has a surface to which silica (silicon dioxide, silicic acid anhydride; $SiO_2$) particles are adherable.

The raw material containing the elements constituting the first silicate contains a silica powder (which may take the sol form and/or the gel form). The silica powder is used as a raw material of the first silicate, and can function as a starting point for coating the substrate with the first silicate. When the first silicate is a smectite silicate such as hectorite, the raw material preferably contains a lithium compound, a magnesium compound and the like.

The shape of silica particles is not particularly limited. For example, the silica particles may have, for example, a spherical shape, a plate-like shape, a scaly shape or an indefinite shape. Silica may be a porous body or may be a non-porous body. The surface of silica is preferably hydrophilic.

The size of silica particles is preferably smaller than the size of the substrate (containing substrate particles) so that the silica particles can adhere to the surface of the substrate. With respect to the ratio of the size of silica particles to the size of the substrate, the median particle size of the substrate is preferably 10 or more, more preferably 50 or more, and further preferably 100 or more, assuming that the average particle size of the silica particles is 1. It is because when the silica particles are relatively larger than the substrate, the number of silica particles adhered to the substrate decreases, and thus the amount of the coating of the first silicate decreases.

The particle size of the silica particles can be optionally set depending on the design of the surface area of silicate-coated powder. The average particle size of the silica powder may be, for example, 5 nm or greater, and 10 nm or greater. The average particle size of the silica powder may be, for example, 2 $\mu$m or smaller, 1 $\mu$m or smaller, 500 nm or smaller, 200 nm or smaller, 100 nm or smaller, 50 nm or smaller, and 20 nm or smaller.

The mixing ratio of the silica powder is preferably 0.02 parts by mass or more , more preferably 0.05 parts by mass or more, more preferably 0.08 parts by mass or more, more preferably 0.1 parts by mass or more, and further preferably 0.15 parts by mass or more relative to 1 part by mass of the substrate. When the mixing ratio is less than 0.02 parts by mass, a smectite is formed insufficiently. The mixing ratio of the silica powder is preferably 0.7 parts by mass or less, more preferably 0.5 parts by mass or less, more preferably 0.3 parts by mass or less, and further preferably 0.25 parts by mass or less. When the mixing ratio is more than 0.7 parts by mass, the substrate aggregates and thus is difficult to be coated with hectorite.

The lithium compound may be any lithium compound which can be a raw material of a lithium element contained in a smectite. As the lithium compound, for example, lithium fluoride (LiF), lithium chloride (LiCl) and the like may be used.

The magnesium compound may be any magnesium compound which can be a raw material of a magnesium element contained in a smectite. As the magnesium compound, for example, magnesium chloride ($MgCl_2$), magnesium hydroxide ($Mg(OH)_2$), magnesium oxide (MgO) and the like may be used.

The dissolving agent is preferably a compound which can dissolve surface portions of the silica particles. As the dissolving agent, for example, sodium hydroxide (NaOH) and a compound which generates hydroxide ions ($OH^-$) by hydrolysis, for example, urea ($CO(NH_2)_2$), and the like may be used.

Next, the mixed liquid is heated (S12; heating step). The mixed liquid is preferably heated with the mixed liquid pressurized. For example, the mixed liquid can be heated and pressurized with an autoclave. The mixed liquid is heated, for example, at a temperature of 80°C or higher, and preferably 100°C or higher, for 30 hours or more, and preferably 40 hours or more.

A reaction product is cooled after heating (S13; cooling step). Cooling is preferably performed by rapid cooling. The solid content in the reaction product is separated after cooling (separating step). Separation may be performed by centrifugal separation treatment or the like. Next, the separated product is dried (drying step), and a silicate-coated body can be obtained.

When the silicate-coated body is not isolated, the separating step and the drying step do not need to be performed.

Figure 3 shows a process in which the surface of a mica particle as a substrate is coated with hectorite. The coating mechanism of hectorite is considered to be as follows. First, silica particles adhere to the surface of the mica particle. Next, hydroxide ions produced by hydrolyzing urea which is a dissolving agent attack the silica particles adhered to the surface of the mica particle. The outer layer of the silica particles is dissolved by this attack. It is considered that the lithium compound and the magnesium compound which are added as raw materials react with a silicon compound produced by the dissolution of the outer layer of silica, hectorite is formed on the surface of the silica particles, and the mica particle is coated with hectorite thereby.

It can be confirmed, for example, by X-ray diffraction measurement whether the first silicate is produced on the surface of the substrate. The production of the first silicate can be also confirmed by whether the product can be colored with a cationic coloring matter (for example, methylene blue).

According to the manufacturing method according to the third embodiment, the silicate-coated bodies according to the first embodiment and the second embodiment can be manufactured. Even if there are not adhesiveness and joining ability between the first silicate and the substrate, the substrate can be coated with the first silicate according to the manufacturing method of the present disclosure. Even if the substrate is powder, the substrate can be coated with the first silicate at the particle level.

A silicate-coated body according to a fourth embodiment of the present disclosure will be described. The silicate-coated body according to the fourth embodiment relates to a colored aspect of the silicate-coated bodies according to the first embodiment and the second embodiment. The reference is made to the above description as to the silicate-coated bodies according to the first embodiment and the second embodiment. In the present disclosure, the term "ionic organic coloring matter" refers to any form of a salt form before ionization and an ion form after electrolytic dissociation.

The silicate-coated body according to the fourth embodiment further contains an ionic organic coloring matter. The ionic organic coloring matter means an organic compound which is dissolved in water in the form of ions. As the ionic organic coloring matter, at least one selected from the group consisting of a cationic organic coloring matter, an anionic organic coloring matter, an acidic organic coloring matter and a basic organic coloring matter can be used depending on a desired color. It is considered that the ionic organic coloring matter is contained in the first silicate. It is considered that the ionic organic coloring matter forms a complex with the first silicate. It is considered that the ionic organic coloring matter is adsorbed in the first silicate by ionic interaction and/or electrostatic interaction.

As the cationic organic coloring matter, for example, methylene blue, rhodamine (for example, rhodamine B (basic violet 10)) may be used. As the anionic organic coloring matter, for example, erythrosine B (red No. 3, sodium tetraiodofluorescein), tartrazine (yellow No. 4), sunset yellow FCF (yellow No. 5), brilliant blue FCF (blue No. 1, erioglaucine A, acid blue 9) and the like may be used.

It can be determined by counter ions whether the organic coloring matter is cationic or anionic. When the counter ion is an anion, the organic coloring matter is cationic, which is the opposite charge. When the counter ion is a cation, the organic coloring matter is cationic, which is the opposite charge.

When the ionic organic coloring matter is an anionic organic coloring matter, the silicate-coated body further contains a multivalent ion. The multivalent ion may be di- or higher valent cation. Examples of the multivalent ion may include an ion of alkaline-earth metals and metal ions. Examples of the multivalent cation may include a magnesium ion ($Mg^{2+}$), calcium ion ($Ca^{2+}$), aluminum ion ($Al^{3+}$) and barium ion ($Ba^{2+}$). A complex ion such as hexaaquaaluminum ion ($[Al(H_2O)_6]^{3+}$) may also be included in multivalent cation.

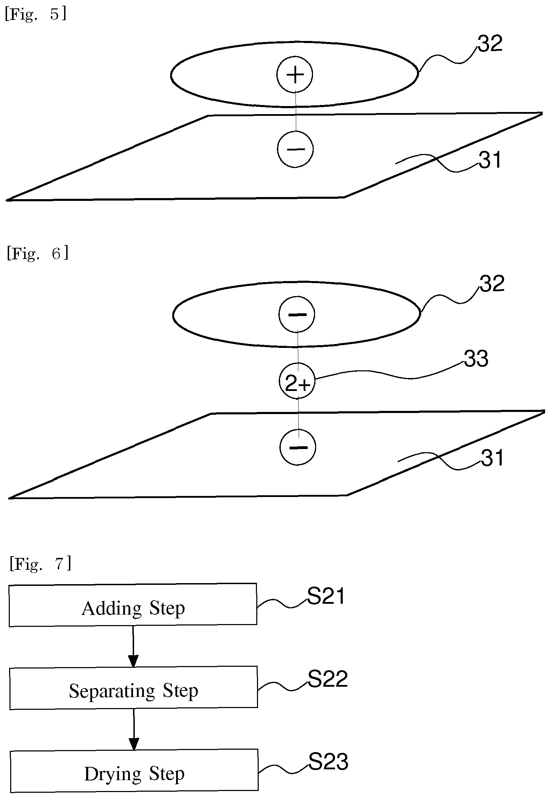

By illustrating the case where the first silicate is a silicate having a layered structure like a smectite silicate as an example below, the structure of the silicate-coated body according to the fourth embodiment will be described. Figure 4 and Figure 5 show conceptual drawings of the silicate-coated bodies according to the fourth embodiment. Figure 5 is a conceptual drawing when the ionic coloring matter is a cationic organic coloring matter. Figure 6 is a conceptual drawing when the ionic coloring matter is an anionic organic coloring matter. However, even if the structures shown below differ from actual structures, the actual structures do not depart from the scope of the present disclosure.

When an ionic organic coloring matter 32 is a cationic organic coloring matter, as shown in Figure 5, it is considered that the ionic organic coloring matter 32 is incorporated into the first silicate by the ionic exchange with an exchangeable positive ion in a smectite silicate. It is considered that the ionic organic coloring matter 32 is adsorbed in the first silicate by the ionic/electrostatic interaction between an ionic functional group of the ionic organic coloring matter 32 and a sheet structure 31 of the first silicate.

When the ionic organic coloring matter 32 is an anionic organic coloring matter, as shown in Figure 6, it is considered that the ionic organic coloring matter 32 is incorporated into the first silicate via a multivalent cation 33. Since the ionic organic coloring matter 32 has the same charge as the sheet structure 31 of the first silicate, the ionic organic coloring matter 32 cannot be incorporated into the first silicate by the direct ionic exchange with the exchangeable positive ion in the smectite silicate. Then, it is considered that by interposing the multivalent cation 33 having a charge opposite to that of the sheet structure 31 between the ionic organic coloring matter 32 and the sheet structure 31 of the first silicate, the ionic organic coloring matter 32 is adsorbed in the first silicate by the ionic/electrostatic interaction among the ionic functional group of the ionic organic coloring matter 32, the multivalent cation 33 and the sheet structure 31 of the first silicate.

Since the charge of the multivalent cation 33 needs to be theoretically equivalent to the charge of the sheet structure 31 of the first silicate and the charge of ionic functional group of the ionic organic coloring matter 32 which is opposed to the sheet structure 31 (or the charge of the whole ionic organic coloring matter), the charge of the multivalent cation 33 needs to have a valence of two or more (for example, a valence of two, a valence of three and the like).

The content of the ionic organic coloring matter can be suitably set depending on a target color tone.

When the ionic organic coloring matter is a cationic coloring matter, the content of the ionic organic coloring matter may be, for example, 0.05% by mass or more, 0.1% by mass or more, 0.5% by mass or more, 1% by mass or more, 3% by mass or more, or 5% by mass or more relative to the mass of the silicate-coated body. The content of the ionic organic coloring matter may be, for example, 15% by mass or less, 12% by mass or less, or 10% by mass or less relative to the mass of the silicate-coated body.

When the ionic organic coloring matter is an anionic coloring matter, the content of the ionic organic coloring matter may be, for example, 0.05% by mass or more, 0.1% by mass or more, 0.5% by mass or more, 1% by mass or more, 3% by mass or more, or 5% by mass or more relative to the mass of the silicate-coated body. The content of the ionic organic coloring matter may be, for example, 10% by mass or less, 8% by mass or less, or 5% by mass or less relative to the mass of the silicate-coated body.

The content of the multivalent cation can be suitably set according to the content of the anionic organic coloring matter. The content of the multivalent cation can be, for example, 0.1% by mass or more, 0.5% by mass or more, or 1% by mass or more based on the mass of the silicate-coated body. The content of the multivalent cation can be, for example, 10% by mass or less, 8% by mass or less, or 6% by mass or less based on the mass of the silicate-coated body.

The amount of the ionic organic coloring matter adsorbed in the silicate-coated body can be measured by the analysis of absorption wavelengths by spectroscopic analysis, for example. The adsorbed amount of the coloring matter can be confirmed by comparing the peak intensity of the colored silicate-coated body with the peak intensity of a coloring matter solution having a prescribed concentration.

The silicate-coated body according to the fourth embodiment of the present disclosure can be used, for example, as a pigment. The ionic organic coloring matter adsorbed in the first silicate is hard to be desorbed, and thus decoloration and color migration is hard to occur. By using a highly safe ionic organic coloring matter, a highly safe colored silicate-coated body can be obtained. The colored silicate-coated body is hard to aggregate, and thus can be easily used. For example, the colored silicate-coated body can therefore be applied to cosmetics and the like.

According to the silicate-coated body according to the fourth embodiment of the present disclosure, the stability of the ionic organic coloring matter can be enhanced, and fading can be suppressed. Some ionic organic coloring matters, which are not adsorbed, are easily decomposed by light, heat, oxygen or the like. When the decomposition of the ionic organic coloring matter proceeds, fading occurs. By adsorbing the ionic organic coloring matter in the first silicate, however, the decomposition of the ionic organic coloring matter can be suppressed. Therefore, by using the colored silicate-coated body as the alternative to the ionic organic coloring matter, the durability of color strength can be enhanced.

The silicate-coated body according to the fourth embodiment of the present disclosure has high usability as a pigment. Usual dyestuffs/pigments used for cosmetics or the like aggregates because these are generally produced through a drying step. Therefore, the usual dyestuffs/pigments are used after crushing aggregates by various methods at the time of use. Meanwhile, the silicate-coated body of the present disclosure is hard to aggregate. Therefore, the colored silicate-coated body of the present disclosure has high usability because a dispersing step is unnecessary. According to the usual dyestuffs/pigments, color strength change and feel deterioration occur owing to the aggregation, whereas, according to the silicate-coated body of the present disclosure, color strength change and feel deterioration can be suppressed.

By selecting an ionic organic coloring matter, the colored silicate-coated body of the present disclosure can have a color which a substrate (for example, mica) alone cannot usually have.

As a fifth embodiment of the present disclosure, a method for manufacturing the silicate-coated body according to the third embodiment will be described. Figure 7 shows a flow chart of the manufacturing method according to the fifth embodiment.

The silicate-coated body produced in the third embodiment and an ionic organic coloring matter is added to an aqueous solvent containing water (S21; addition step). The aqueous solvent may be an aqueous solvent which can electrolytically dissociate the ionic organic coloring matter, and does not inhibit the adsorption of the ionic organic coloring matter in the silicate-coated body. The silicate-coated body and the ionic organic coloring matter may be added in any order or simultaneously. An aqueous solution in which the ionic organic coloring matter is dissolved in water separately may be added to a dispersion medium of the silicate-coated body. It is considered that the ionic organic coloring matter is ionized in the aqueous solvent. As the ionic organic coloring matter, the coloring matter described above can be used. One or more type(s) of the ionic organic coloring matter may be used.

The rate of the silicate-coated body added can be optionally set. The rate of the ionic organic coloring matter added can be suitably set depending on a desired strength of coloring.

When the ionic organic coloring matter is an anionic organic coloring matter, a salt or a compound (multivalent cation source) which can generate multivalent cations by electrolytic dissociation is dissolved in an aqueous solvent. Examples of the multivalent cation source may include chlorides and hydroxide of multivalent cations. Examples of the multivalent cation source may include calcium chloride ($CaCl_2$), magnesium chloride ($MgCl_2$), barium chloride ($BaCl_2$) and aluminum chloride hydrate ($[Al(H_2O)_6]Cl_3$). One or more type of the multivalent cation source may be used.

The aqueous solvent containing the silicate-coated body and the ionic organic coloring matter is preferably stirred to increase the coloring speed.

The amount of the ionic organic coloring matter added can be suitably set depending on a target color tone. The proportion of the ionic organic coloring matter added may be, for example, 0.01 parts by mass or more, 0.1 parts by mass or more, 0.2 parts by mass or more, or 0.5 parts by mass or more relative to 100 parts by mass of a silicate-coated body before coloring added in S21. The proportion of the ionic organic coloring matter added may be, for example, 2 parts by mass or less, 1.5 parts by mass or less, or 1 part by mass or less relative to 100 parts by mass of the silicate-coated body before coloring.

The amount of the multivalent cation source added can be suitably set according to the amount of the anionic organic coloring matter added. The proportion of the multivalent cation source added can be, for example, 0.5 parts by mass or more, 1 part by mass or more, or 2 parts by mass or more relative to 100 parts by mass of the silicate-coated body before coloring added in S21. The proportion of the multivalent cation source added can be, for example, 12 parts by mass or less, 10 parts by mass or less, or 8 parts by mass or less relative to 100 parts by mass of the silicate-coated body before coloring.

Next, when the silicate-coated body is colored to a desired degree, the colored silicate-coated body is separated from the aqueous solvent by filtration or the like (S22; separating step). Next, the separated colored silicate-coated body is dried (S23; drying step). A colored silicate-coated body can be obtained thereby. When the colored silicate-coated body does not need to be isolated, the separating step and the drying step may not be performed.

A substrate (for example, mica) itself cannot usually be colored only by mixing the substrate and the ionic organic coloring matter. However, according to the manufacturing method according to the fifth embodiment, even a substrate which is difficult to color directly can be colored (give color to the substrate). The substrate can be colored by a simple method.

According to the manufacturing method according to the fifth embodiment, the substrate can be colored regardless of whether the ionic organic coloring matter is anionic or cationic. The substrate can be colored a desired color by selection and combination of the ionic organic coloring matters. The substrate can be colored especially a color which the substrate alone cannot usually have.

As a sixth embodiment of the present disclosure, a method for manufacturing the silicate-coated body according to the third embodiment will be described. In the fifth embodiment, the substrate is coated with the first silicate to produce the silicate-coated body, and the silicate-coated body is then colored. In the sixth embodiment, the substrate is coated with the first silicate and colored at the same time.

In the sixth embodiment, an ionic organic coloring matter is further added in the mixing step (S11) in the third embodiment. When an anionic organic coloring matter is used, a salt used as a multivalent cation source is also added together. The method can be performed in the same way as in the third embodiment other than the addition of the ionic organic coloring matter and the multivalent cation source.

According to the sixth embodiment, a colored silicate-coated body can be obtained in more simplified steps than in those of the third embodiment. The sixth embodiment is useful when the ionic organic coloring matter can resist a heating step, and disadvantage such as the aggregation of the ionic organic coloring matter does not occur.

[Examples]

A silicate-coated body and a method for manufacturing the same of the present disclosure will be described hereinafter by giving examples. The silicate-coated body and the method for manufacturing the same are not, however, limited to the following examples.

[Test Examples 1 to 6]

[Production of hectorite-coated mica]

A silicate-coated mica which had mica as a substrate and had hectorite as a first silicate was produced. Synthetic mica (phlogopite; $KMg_3AlSi_3O_{10}F_2$), silica sol, LiF, $MgCl_2$ and urea were placed into water, and these were dispersed ultrasonically. Synthetic mica having a median particle size of 12 $\mu$m and an average thickness of 0.3 $\mu$m was used. Silica sol having an average particle size of 10 nm was used. Silica particles were spherical, non-porous and hydrophilic. The mixing ratio of silica (fineness) varied to 0.1 g (Test Example 1), 0.2 g (Test Example 2), 0.3 g (Test Example 3), 0.4 g (Test Example 4), 0.5 g (Test Example 5) and 1g (Test Example 6) relative to 1 g of synthetic mica. The mixing ratio of silica sol to LiF to $MgCl_2$ to urea was a molar ratio of a Si element:a Li element:a Mg element:urea = 40:7:28:255. Next, the mixed liquid was subjected to heating and pressurizing treatment at 100°C for 48 hours with an autoclave. Next, the reaction product was cooled rapidly, the solid content was then separated by centrifugal separation treatment, and the separated solid content was dried. The obtained solid content was analyzed.

[X-ray diffraction measurement]

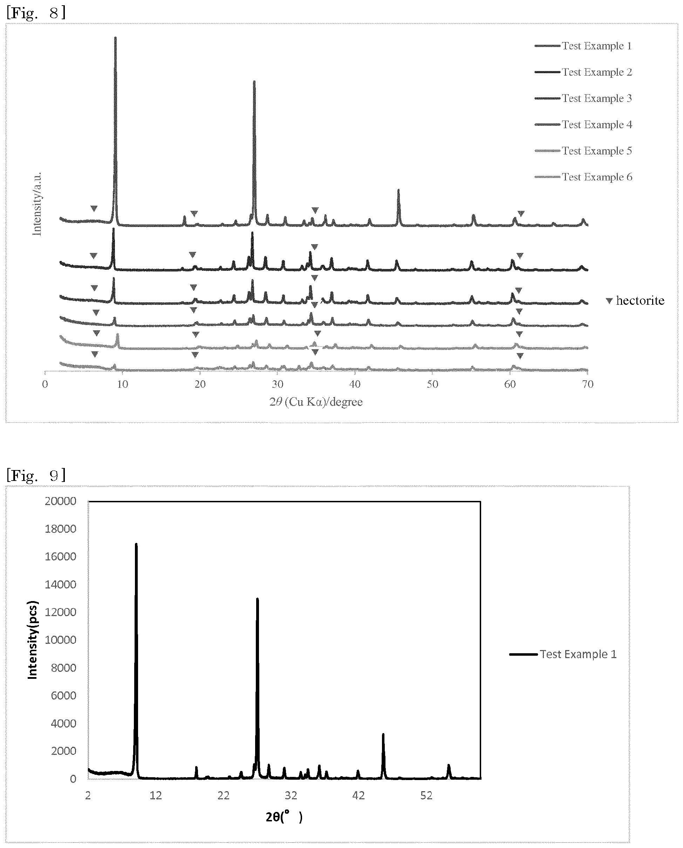

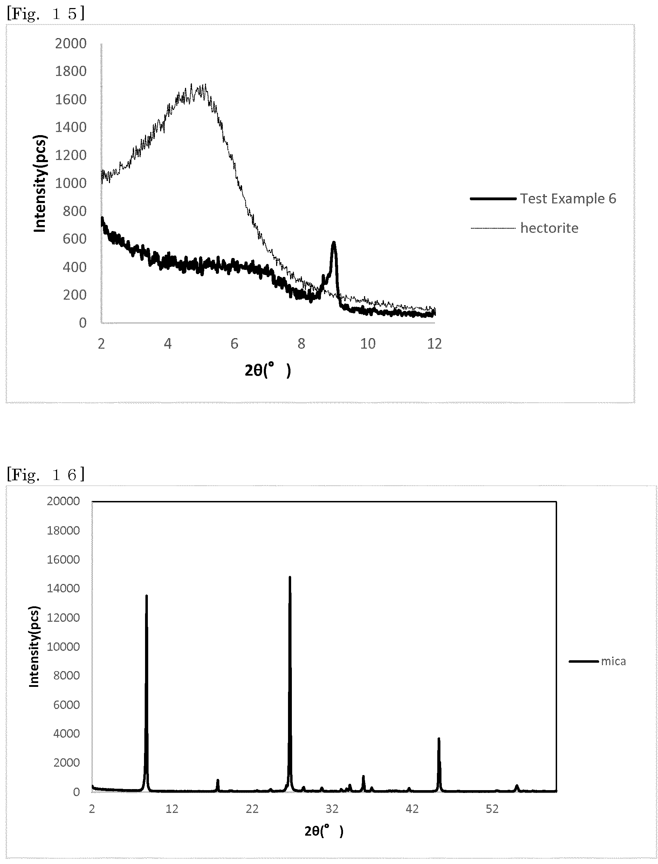

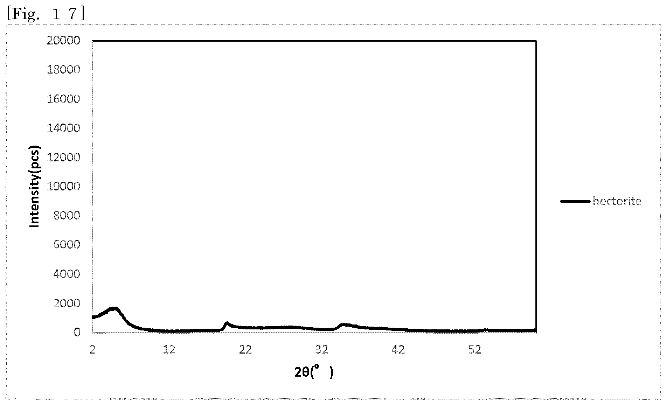

The X-ray diffraction measurement of the reaction products of Test Examples 1 to 6 was performed (CuK$\alpha$ rays; Rigaku RINT 2200 V/PC). Figure 8 shows the X-ray diffraction patterns of the reaction products obtained in Test Examples 1 to 6. The patterns shown in Figure 8 show the patterns of Test Examples 1 to 6 in sequential order from the top. Figure 16 shows the X-ray diffraction pattern of synthetic mica alone as a comparative control. Figure 17 shows the X-ray diffraction pattern of hectorite alone. The peaks of hectorite appear in any X-ray diffraction patterns shown in Figure 8. It is therefore considered that hectorite is produced in Test Examples 1 to 6. In the pattern of mica shown in Figure 16, peaks exist at positions at which, for example, the $2\theta$ is around 9°, 27° and 45°, and in the patterns shown in Figure 8, peaks also exist at the same positions. It is found from this that mica remains in the products.

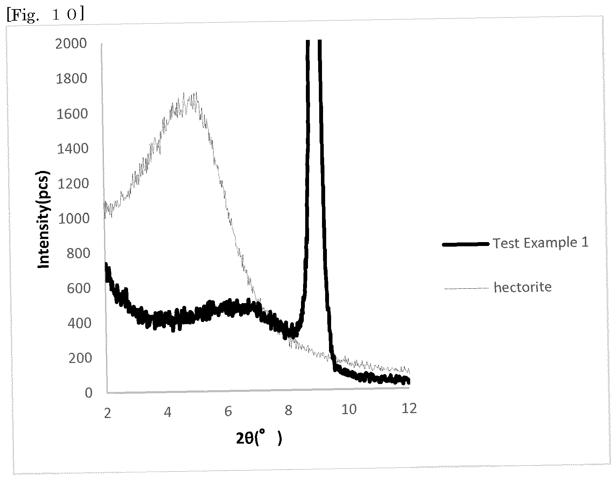

It is examined in more detail whether hectorite is produced or not by comparing the X-ray diffraction patterns of the reaction products with the X-ray diffraction pattern of hectorite. Figure 9 shows the X-ray diffraction pattern of the reaction product according to Test Example 1. Figure 10 shows the X-ray diffraction patterns of the product and hectorite, which are enlarged the ranges of $2\theta = 2°$ to 12° in the patterns shown in Figure 9 and Figure 17. In the pattern of hectorite shown in Figure 17, a broad peak exists in the range of $2\theta = 2°$ to 8°. On the other hand, in the pattern of mica shown in Figure 16, no peak exists in the range of $2\theta = 2°$ to 8°. Then, it can be confirmed whether hectorite is produced or not by focusing on the peak of a reaction product in the range of $2\theta = 2°$ to 8°.

Referring to the pattern according to Test Example 1 shown in Figure 10, a broad weak peak exists in the range of 4° to 8° as in the pattern of hectorite. It is considered that this peak is a peak derived from hectorite. That is, it is considered that the reaction product has hectorite. In Figure 10, the peak of Test Example 1 exists in the higher angle side than the peak of hectorite. It is considered that this is because the peak of Test Example 1 shifted to the higher angle side since water enters between the layers of hectorite.

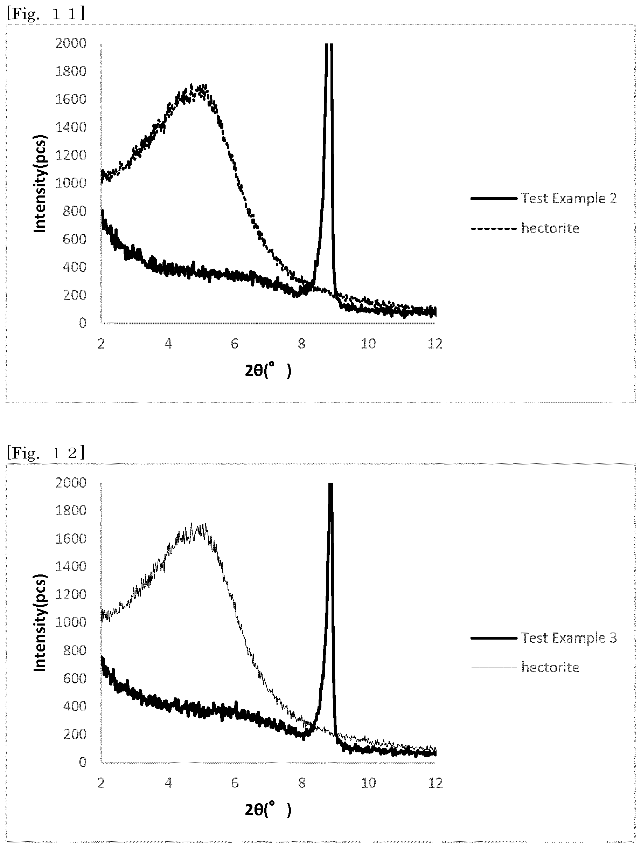

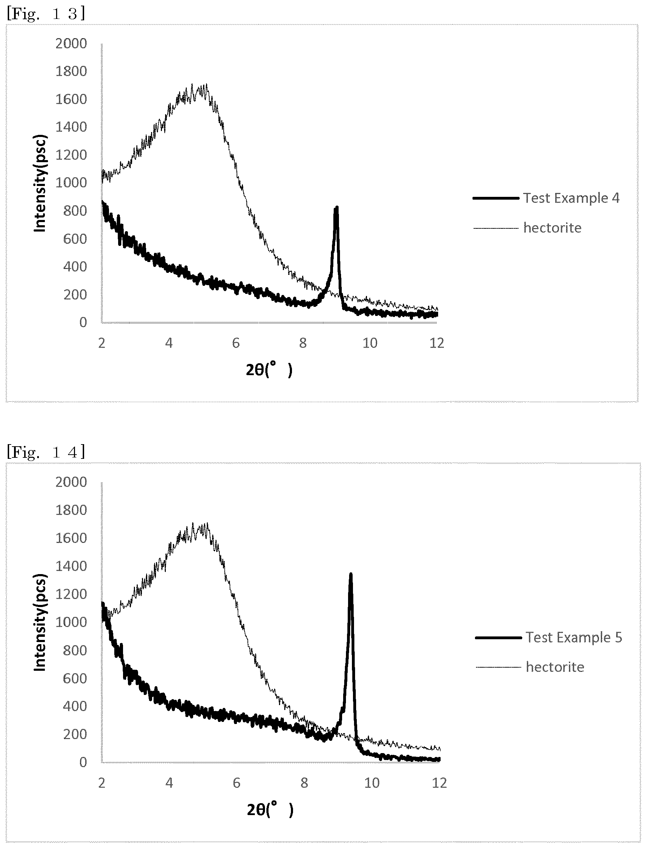

Figure 11 to Figure 15 show the X-ray diffraction patterns of the products of Test Examples 2 to 6 and hectorite in the range of $2\theta = 2°$ to 12° as in Figure 10, respectively. According to the X-ray diffraction patterns, it is considered that hectorite is produced also in Test Examples 2 to 6. It was however found in Test Examples 4 to 6 that as the addition amount of silica increased, the peak intensity of hectorite tended to become weaker. It is therefore considered that the production amount of hectorite decreases with an increase in the addition amount of silica.

[Scanning electron microscope (SEM) observation]

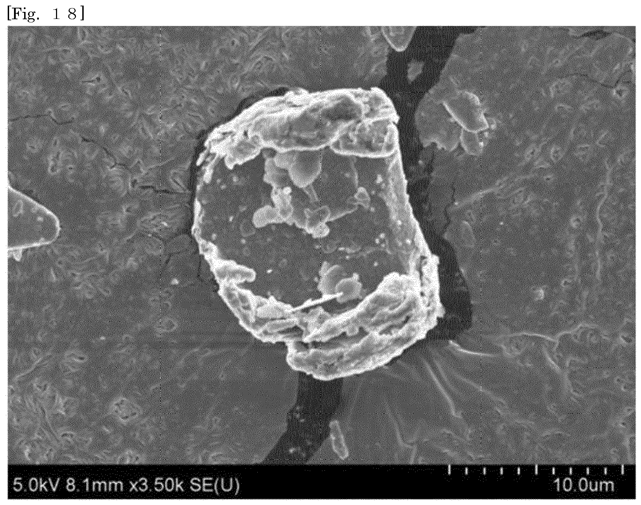

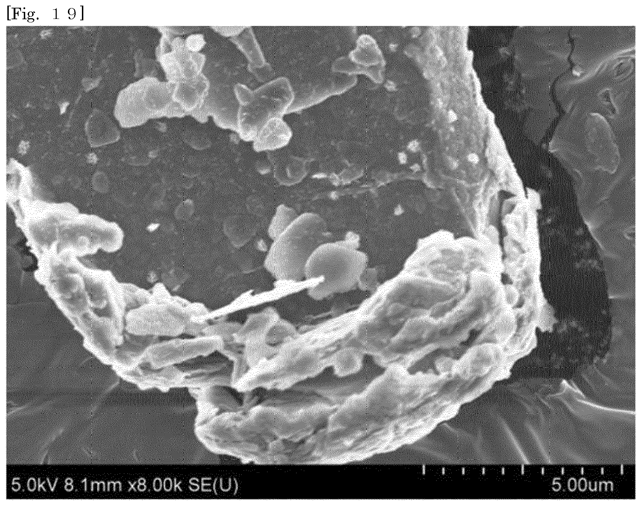

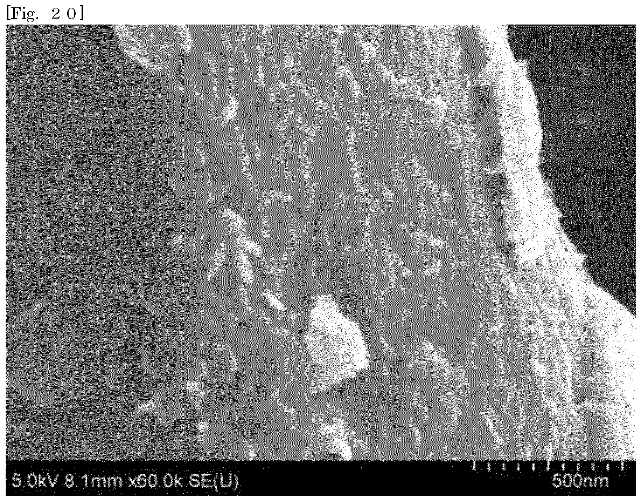

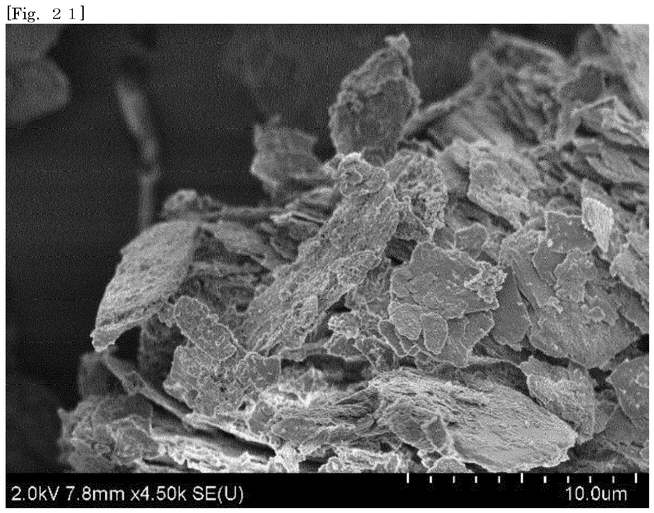

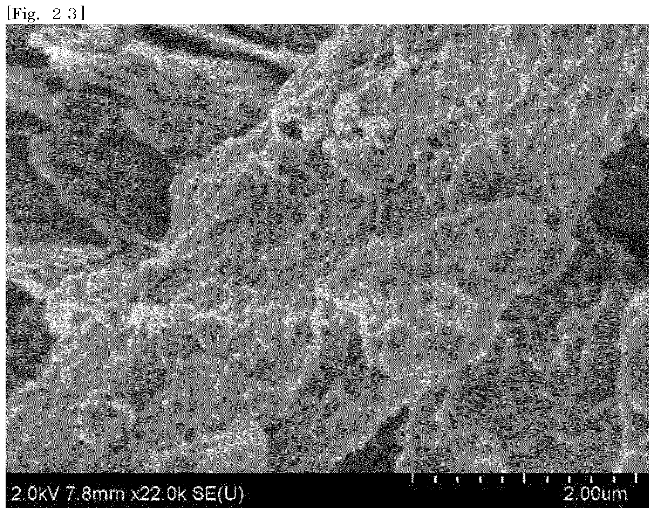

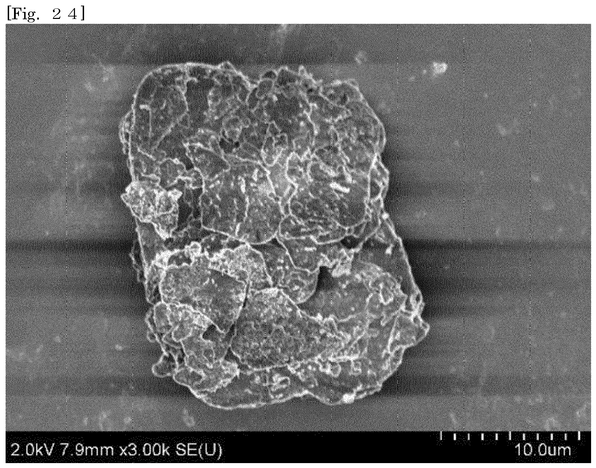

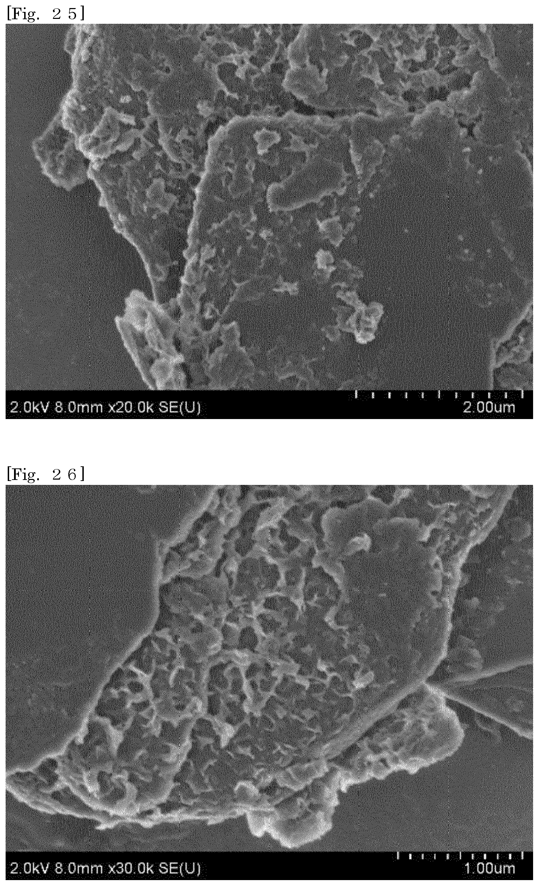

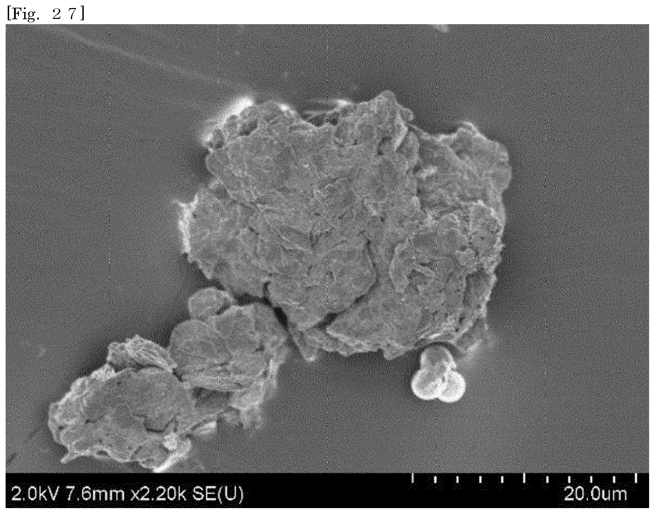

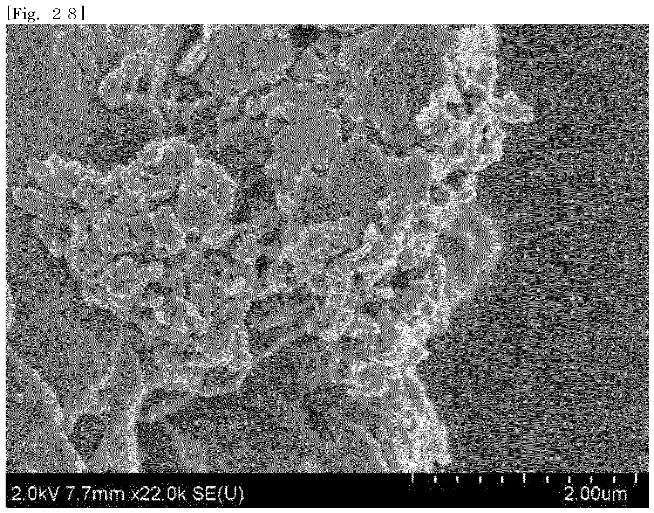

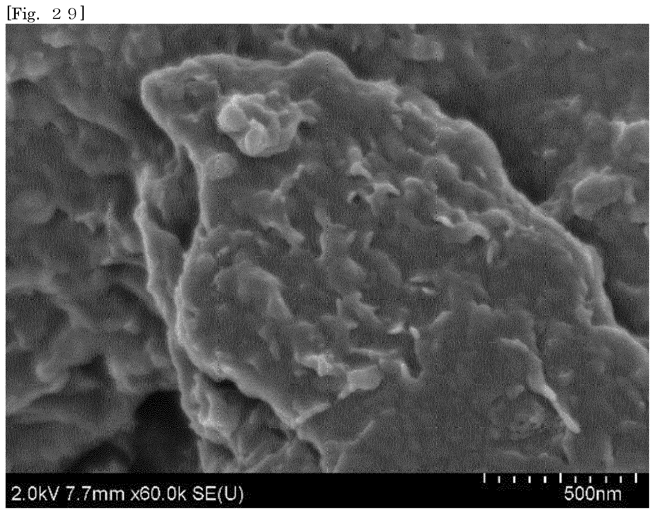

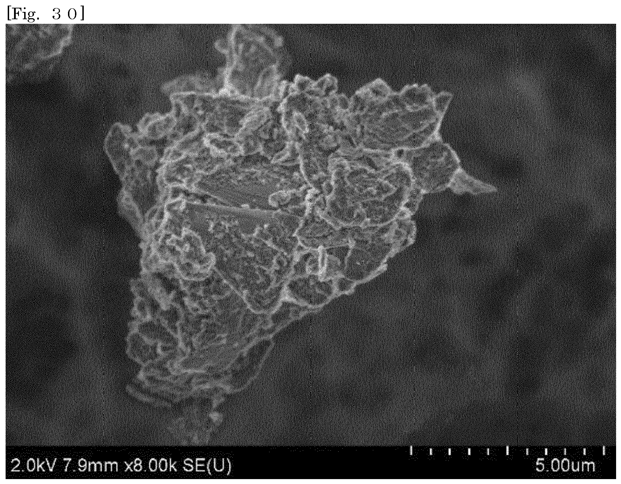

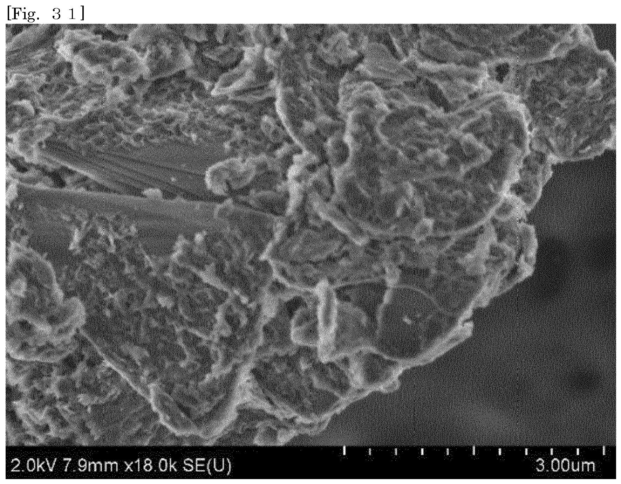

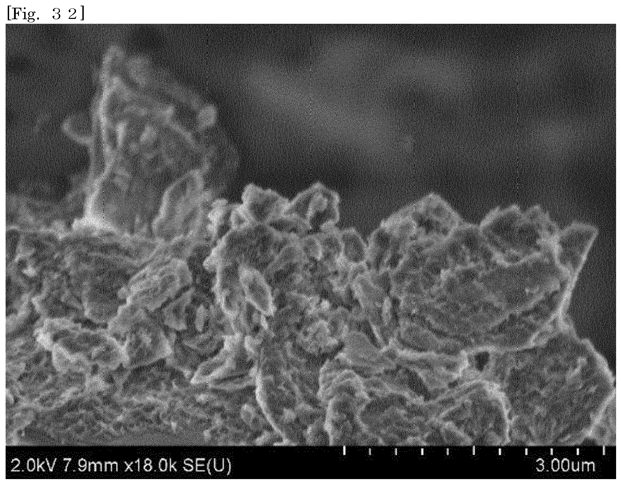

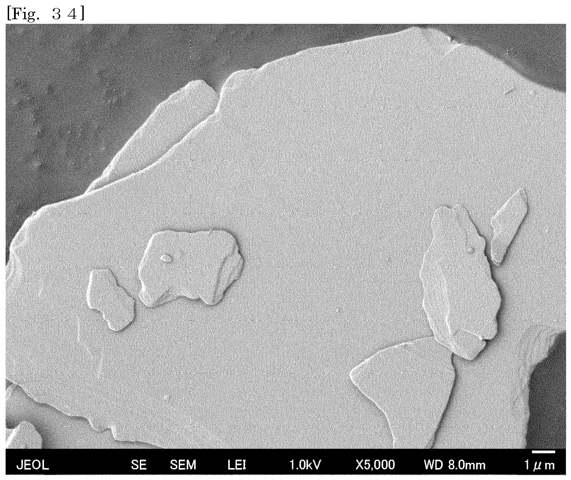

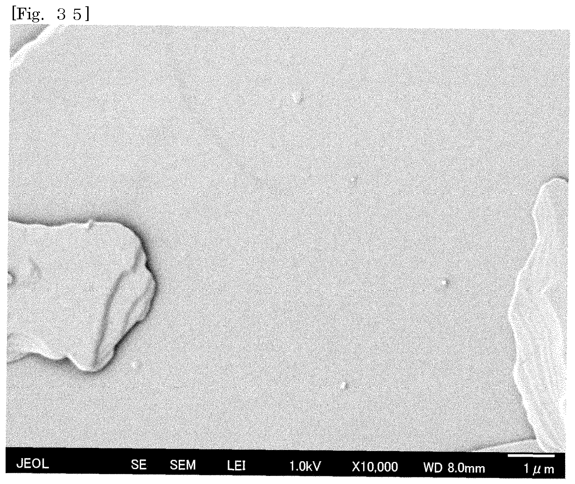

With respect to the products in Test Examples 1 to 5, the appearances and the surfaces of particles were observed using a field emission scanning electron microscope (Hitachi SU-8000). Figure 18 to Figure 20 show SEM images of the product in Test Example 1. Figure 21 to Figure 23 show SEM images of the product in Test Example 2. Figure 24 to Figure 26 show SEM images of the product in Test Example 3. Figure 27 to Figure 29 show SEM images of the product in Test Example 4. Figure 30 to Figure 32 show SEM images of the product in Test Example 5. Figure 29 to Figure 35 show SEM images of synthetic mica alone as comparative controls.

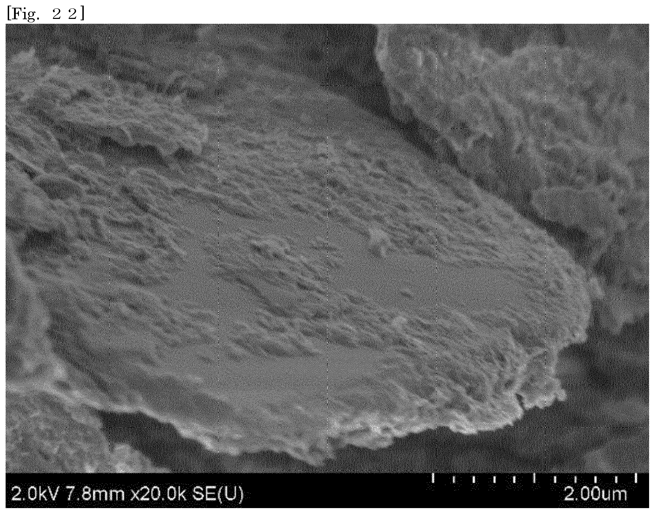

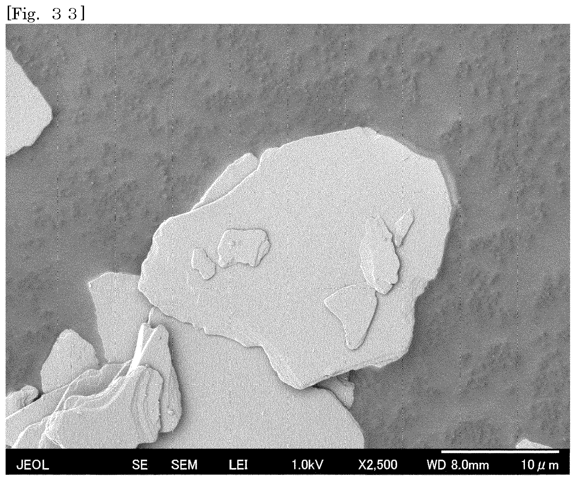

In the images of Figure 18 to Figure 32, plate-like particles (substrate particles) are mica particles. According to SEM images of mica alone shown in Figure 33 to Figure 35, mica has a smooth surface. On the other hand, the surfaces of the particles shown in Figure 18 to Figure 32 are not smooth (for example, minute unevenness exists). It is therefore considered that substances existing on unsmooth regions in the surface of the particles (fibrous projections or extraneous matters) are hectorite and/or silica in the images of Figure 18 to Figure 32. It is therefore considered that hectorite-coated mica could be formed in any of Test Examples 1 to 5. It is considered that regions which look smooth are portions in which mica is exposed, for example, in particles shown in Figure 22. Meanwhile, the aggregation and solidification of mica particles were observed as the addition amount of silica increased.

[Creation of adsorption isotherm]

It was confirmed whether methylene blue could be adsorbed on the products of Test Examples 1 to 5 to deposit a coloring matter in the reaction products. The production amount of hectorite was measured from the adsorption amount of methylene blue.

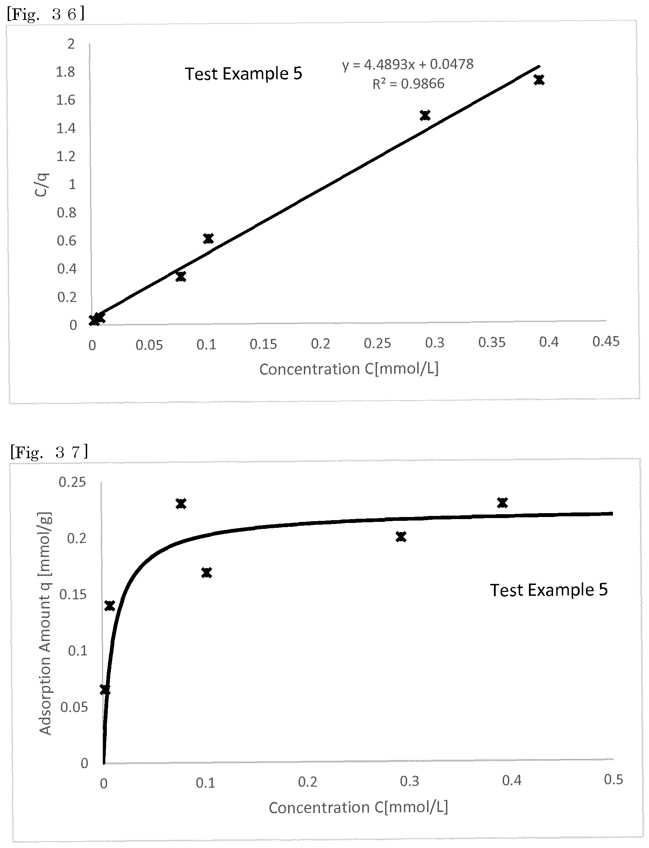

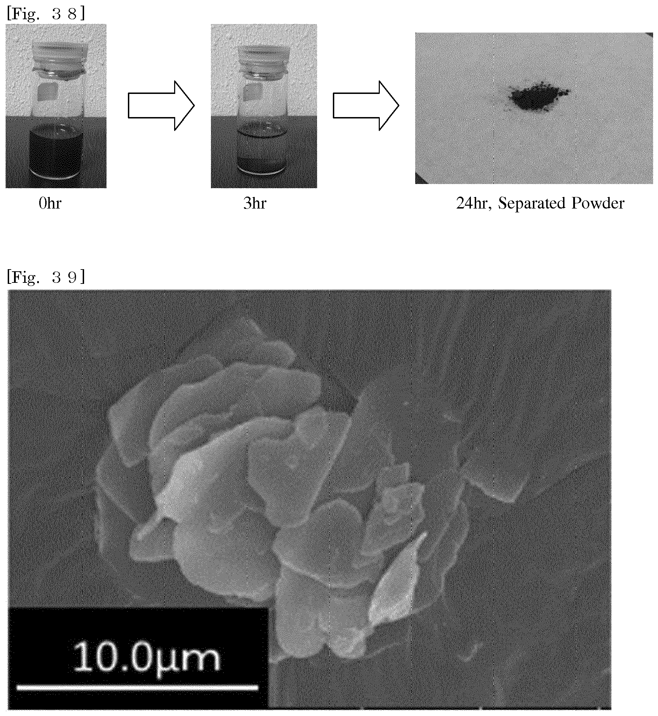

Six aqueous methylene blue solutions having different concentrations of methylene blue were prepared. Then, 50 mg of a product of each Test Example was immersed in 25 mL of an aqueous methylene blue solution having each concentration, and the aqueous solution was subjected to reciprocatory shaking at 25°C for 24 hours. The shaken aqueous solution was subjected to centrifugal separation treatment (at 3 krpm for 10 minutes), and the absorbance of the supernatant liquid ($\lambda = 665$ nm) was measured. An adsorption amount q (mmol/g) of methylene blue relative to 1 g of the product was calculated from the obtained absorbance. Measured values were plotted with the axis of abscissas showing the methylene blue concentration (equilibrium concentration) C (mmol/L) and the axis of ordinates showing the methylene blue concentration/the adsorption amount of methylene blue C/q (g/L), and an approximate straight line was found. A saturated (maximum) adsorption amount $q_m$ (mmol/g) of methylene blue was found from the reciprocal of the slope of the approximate straight line, and the equilibrium coefficient K (L/mol) was found from the intercept. The theoretical curve of the adsorption isotherm was found from the obtained maximum adsorption amount $q_m$ and the equilibrium coefficient K. Table 1 shows the concentrations C of the prepared aqueous methylene blue solutions. Table 2 shows the calculated saturated adsorption amount $q_m$, the equilibrium coefficient K, and the correlation coefficient of the approximate straight line. Figure 36 and Figure 37 show the approximate straight line and the theoretical curve of the adsorption isotherm, respectively, according to Test Example 5 as an example. Figure 38 shows a photograph showing the state immediately after a product was immersed in an aqueous methylene blue solution, a photograph showing the state for 3 hours from commencing immersion, and a photograph showing the state in which the product was separated from the aqueous solution 24 hours later, washed and dried.

As shown in Figure 38, the product was colored blue by the addition to the aqueous methylene blue solution. Methylene blue is adsorbed in hectorite, whereas methylene blue is not adsorbed in mica and silica. It is therefore considered that hectorite is formed in the products of Test Examples 1 to 5. Since uneven color was not observed on the separated powder, it is considered that hectorite adhered to mica powder uniformly.

Although the addition amount of silica was increased in the order of Test Examples 1 to 5, as shown in Table 2, an increase in the saturated adsorption amount $q_m$ from Test Example 1 to Test Example 2 was found. In Test Examples 2 to 5, however, an increase in the saturated adsorption amount $q_m$ was not found. It is considered from this that the production amount of hectorite depends on the addition amount of silica.

[Table 1]

|  | Methylene blue concentration C (mmol/L) |
| --- | --- |
| Test Example 1 | 0.065, 0.130, 0.195, 0.26, 0.325, 0.390 |
| Test Examples 2 to 5 | 0.14, 0.28, 0.42, 0.56, 0.7, 0.84 |

[Table 2]

|  | Saturated Adsorption Amount $q_m$ (mmol/g) | Equilibrium Coefficient K ($10^5$ L/mol) | Correlation Coefficient $r^2$ |
| --- | --- | --- | --- |
| Test Example 1 | 0.11 | 8.4 | 0.99 |
| Test Example 2 | 0.24 | 0.34 | 0.95 |
| Test Example 3 | 0.24 | 0.26 | 0.95 |
| Test Example 4 | 0.10 | - | - |
| Test Example 5 | 0.22 | 0.94 | 0.99 |

Therefore, According to a combination of the X-ray diffraction measurement, the SEM image analysis, and the visible and ultraviolet spectroscopic analysis, it is considered that in Test Examples 1 to 5, hectorite-coated mica in which at least a part of the mica particle is coated with hectorite can be produced. However, it is considered that when the addition amount of silica is increased, silica acts as an adhesive and aggregates mica particles, a silica polymer is generated and covers the surface of mica, and the production and coating of hectorite are inhibited thereby. Therefore, it is considered that, for a condition to adhere hectorite to mica suitably, silica is preferably 0.1 g or more and preferably 0.15 g or more relative to 1 g of mica. It is considered that silica is preferably 0.3 g or less and preferably 0.25 g or less relative to 1 g of mica to suppress the aggregation and solidification of the powder.

[Test Example 7]

It was confirmed whether, as to the products obtained in Test Examples 1 to 6, hectorite could adhere directly to mica in order to confirm the relationship among hectorite, mica and silica. To be concrete, tests in the similar way to in Test Examples 1 to 6 were performed to a mixture of synthetic mica, hectorite and urea, which does not contain silica, a magnesium compound and a lithium compound. That is, synthetic mica, hectorite and urea were dispersed in water and subjected to heating and pressurizing treatment under the same conditions as in Test Examples 1 to 6, and then treated substances were collected.

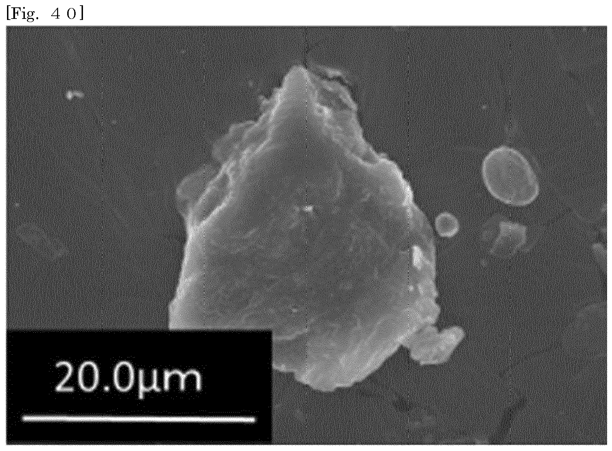

SEM images of the obtained treated substances were taken. Figure 39 and Figure 40 show the SEM images of the treated substances. According to the SEM images, mica and hectorite were separated with each other and the adhesion between mica and hectorite was not confirmed. On the other hand, the aggregation of hectorite was confirmed. Therefore, it is considered that most produced hectorite does not adhere directly to mica in Test Examples 1 to 6, too.

[Test Example 8]

It was confirmed whether, as to the products obtained in Test Examples 1 to 6, silica could adhere directly to mica in order to confirm the relationship among hectorite, mica and silica. To be concrete, tests in the similar way to in Test Examples 1 to 6 were performed to a mixture of synthetic mica, silica and urea, which does not contain a magnesium compound and a lithium compound. That is, synthetic mica, silica sol and urea were dispersed in water and subjected to heating and pressurizing treatment under the same conditions as in Test Examples 1 to 6, and then treated substances were collected.

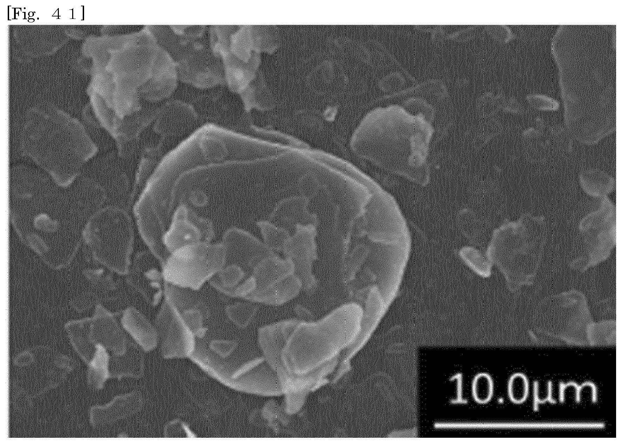

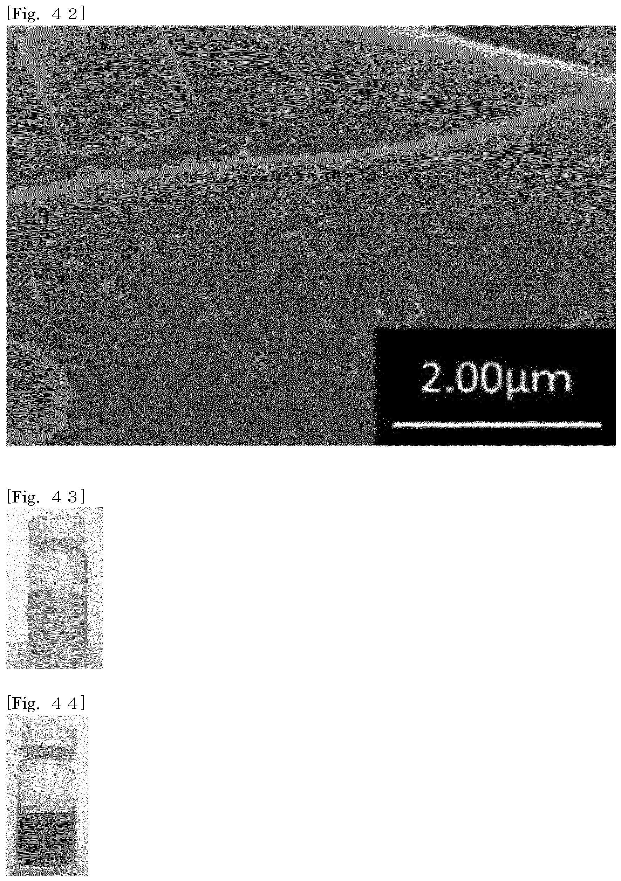

SEM images of the obtained treated substances were taken. Figure 41 and Figure 42 show SEM images of the treated substances. According to the SEM images, it was confirmed that silica particles adhered to the surface of mica. Therefore, it is considered that silica adheres to mica also in the products obtained in Test Examples 1 to 6.

According to Test Example 7, hectorite is not adsorbed on mica. According to Test Example 8, silica is adsorbed on mica. According to Patent Literature 2 and Non-Patent Literature 1, hectorite is produced on silica. Therefore, silica (and/or a silicon compound derived from silica) first adheres to mica in a hectorite coating process. It is considered that a part of the surface of adhered silica is attacked by a hydroxide ion, hectorite is formed from silica, which acts as a starting point, by reacting with other raw materials, and mica is consequently coated with hectorite.

Therefore, it is considered that according to the method of the present disclosure, it is possible to coat a substrate with a smectite silicate such as hectorite, even if the substrate has low adhesive ability to hectorite, if the substrate has an ability to adhere silica.

[Test Examples 9 to 14]

Colored silicate-coated bodies colored with ionic organic coloring matters were produced. The silicate-coated body produced in Test Example 1 was used as a raw material. As cationic organic coloring matters, methylene blue (Test Examples 9 and 10) and rhodamine B (Test Example 11) were used. As anionic organic coloring matters, brilliant blue FCF (Test Example 12), erythrosine B (Test Example 13) and tartrazine (Test Example 14) were used. The amounts of methylene blue were changed in Test Examples 9 and 10. The CIE1976L*a*b* color spaces (JISZ8781) were measured as to the obtained colored silicate-coated bodies. The color space was measured by filling a powder cell with 0.7 g of each sample and using a color difference meter CR-400 manufactured by KONICA MINOLTA, INC. Table 3 shows addition rates of the ionic organic coloring matters and color tones of the colored silicate-coated bodies. The addition proportions shown in Table 3 indicate the addition proportions (parts by mass) relative to 100 parts by mass of a silicate-coated body before coloring. The details of each Test Examples will be described hereinafter.

[Table 3]

| | Ionic Organic Coloring Matter | | Cation Source (parts by mass) | Color Tone | | |
|---|---|---|---|---|---|---|
| | Name | Parts by Mass | | L * | a * | b * |
| Test Example 9 | Methylene blue | 0.05 | - | 82.95 | -9.18 | -10.95 |
| Test Example 10 | Methylene blue | 0.90 | - | 54.23 | 3.61 | -20.24 |
| Test Example 11 | Rhodamine B | 0.27 | - | 74.62 | 36.81 | -13.82 |
| Test Example 12 | Brilliant blue FCF | 0.20 | 4 | 74.33 | -11.87 | -20.40 |
| Test Example 13 | Erythrosine B | 0.20 | 4 | 77.80 | 31.84 | -0.07 |
| Test Example 14 | Tartrazine | 0.40 | 6 | 90.70 | -3.37 | 33.15 |

In Test Examples 9 and 10, methylene blue was adsorbed in the silicate-coated body, which had not been colored, by the same method as the method in which the colored samples were produced to create the above adsorption isotherm in Test Examples 1 to 5. Figure 43 and Figure 44 show photographs of the colored silicate-coated bodies obtained in Test Examples 9 and 10, respectively. As shown in Figure 43, in Test Example 9 in which the methylene blue concentration was low, a silicate-coated body colored light blue could be obtained, and as shown in Figure 44, in Test Example 10 in which the methylene blue concentration was high, a silicate-coated body colored dark blue could be obtained. Therefore, it was found that, by changing the adsorption amount of an ionic organic coloring matter corresponding to the addition proportion of the ionic organic coloring matter, the strength of the color tone of a colored silicate-coated body can be adjusted.

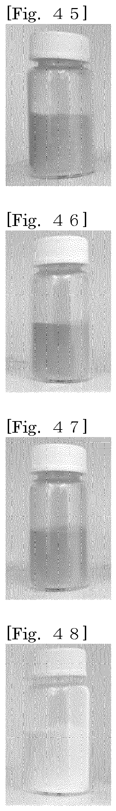

In Test Example 11, the silicate-coated body before coloring was added to water so that the concentration was 10% by mass. Next, rhodamine B was added at an addition proportion shown in Table 3, and the mixture was stirred for 1 hour. Next, the produced object was dehydrated and filtered by centrifugal separation, and then dried at 100°C. The dried product was passed through a 120-mesh sieve to obtain a colored silicate-coated body. Figure 45 shows a photograph of the colored silicate-coated body obtained in Test Example 11. The silicate-coated body colored pink could be obtained.

In Test Examples 12 to 14, each of the silicate-coated bodies before coloring was added to water, respectively, so that the concentration was 10% by mass. Next, each organic coloring matter was added at an addition proportion shown in Table 3. Next, as a multivalent cation source, aluminium chloride hydrate was added at an addition proportion shown in Table 3, and the mixture was stirred for 1 hour or more. Next, the produced object was dehydrated and filtered by centrifugal separation, and then dried at 100°C. The dried product was passed through with a 120-mesh sieve to obtain a colored silicate-coated body. Figure 46 to Figure 48 show photographs of the colored silicate-coated bodies obtained in Test Examples 12 to 14, respectively. A silicate-coated body colored blue could be obtained in Test Example 12. A silicate-coated body colored red could be obtained in Test Example 13. A silicate-coated body colored yellow could be obtained in Test Example 14.

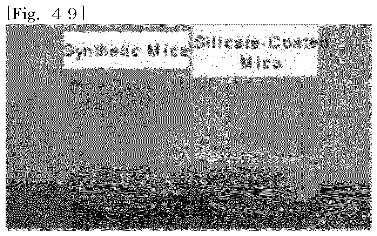

As a comparative example of Test Example 14, a coloring step was performed by the same method as in Test Example 14 except that synthetic mica having the same particle size was used instead of the silicate-coated body before coloring as a body to be colored. Figure 49 shows the states in which the mixed liquids before centrifugal separation dehydration in the coloring process of Test Example 14 and Comparative Example were left to stand. In the mixed liquid using the silicate-coated body as a body to be colored (on right side), the supernatant liquid became transparent. On the other hand, in the mixed liquid using synthetic mica as a body to be colored (on left side), the supernatant liquid remained cloudy. That is, it was shown that the coloring matter was not adsorbed on synthetic mica. Therefore, it is considered that the ionic organic coloring matter is adsorbed in hectorite.

Accordingly, it was found that the method of the present disclosure is useful for coloring mica. It was found that a substrate such as mica colored a desired color can be obtained by using an ionic organic coloring matter.

It was confirmed whether or not the coloring matters were desorbed from the colored silicate-coated bodies produced in Test Examples 9 to 14. Removabilities from the skin were compared as to the colored silicate-coated bodies and the ionic organic coloring matters. The colored silicate-coated bodies of Test Examples 9 to 14 and the ionic organic coloring matters were applied to skin, respectively, and it was then confirmed visually whether or not each color came off from the skin by washing away lightly with water. The evaluation standards of color removability are shown below. Table 4 shows the results.

A: A color can be removed from the skin only by washing with water lightly.
B: A color cannot be removed from the skin just by washing with water lightly.

When an ionic organic coloring matter itself was applied to the skin, the coloring matter entered into the skin depression, and thus the color remains on the skin even though the skin is washed with water. On the other hand, in the case of a colored silicate-coated body, the color could be removed from the skin easily only by washing with water. Therefore, it was confirmed that an ionic organic coloring matter adsorbed in a colored silicate-coated body is not easily desorbed from the silicate-coated body. It was also confirmed that the colored silicate-coated body is easily removable.

[Table 4]

| Substance to be applied | Evaluation of Color Removability |
|---|---|
| Colored silicate-coated body of Test Example 9 | A |
| Colored silicate-coated body of Test Example 10 | A |
| Colored silicate-coated body of Test Example 11 | A |
| Colored silicate-coated body of Test Example 12 | A |
| Colored silicate-coated body of Test Example 13 | A |
| Colored silicate-coated body of Test Example 14 | A |
| Methylene blue | B |
| Rhodamine B | B |
| Brilliant blue FCF | B |
| Erythrosine B | B |
| Tartrazine | B |

The silicate-coated body and manufacturing method thereof of the present invention have been described according to the foregoing embodiments and examples, but the invention is not limited to the foregoing embodiments and examples and may encompass various transformations, modifications, and improvements made to the various disclosed elements (including elements disclosed in the Claims, Description, and Drawings) within the scope of the invention and according to the fundamental technical idea of the present invention. Further, various combinations, substitutions, and selections of the various disclosed elements are possible within the scope of the claims of the invention.

Further issues, objectives, and embodiments (including modifications) of the present invention are revealed also from the entire disclosure of the invention including the Claims.

The numerical ranges disclosed herein are to be construed in such a manner that arbitrary numerical values and ranges falling within the disclosed ranges are treated as being concretely described herein, even where not specifically stated.

[Industrial applicability]

The silicate-coated body of the present disclosure can be applied, for example, to cosmetics, paint, metal ion adsorbents, films, nanocomposite materials, and the like.

[Reference Signs List]

1: Substrate
2: Adhesive agent
3: First silicate
10, 20: Silicate-coated body
31: Sheet structure
32: Ionic organic coloring matter
33: Multivalent cation

**Claims**

1.  A silicate-coated body, comprising:

    a mica particle; and
    a first silicate coating at least part of the mica particle.

2.  The silicate-coated body according to claim 1, wherein the first silicate is bonded to the mica particle via silica and/or a silica modified product.

3.  The silicate-coated body according to claim 1 or 2, wherein a median particle size of the mica particle is 0.1 $\mu$m to 10 mm.

4.  A silicate-coated body, comprising:

    a substrate;
    silica and/or a silica modified product adhered to a surface of the substrate; and
    a first silicate coating at least part of the substrate via the silica and/or the silica modified product.

5.  The silicate-coated body according to claim 4, wherein the substrate is flaky and/or plate-like mica powder.

6.  The silicate-coated body according to claim 4 or 5, wherein the first silicate is integrated with the silica and/or the silica modified product.

7.  The silicate-coated body according to any one of claims 1 to 6, wherein the first silicate comprises a smectite silicate.

8.  The silicate-coated body according to any one of claims 1 to 7, further comprising:

    an ionic organic coloring matter; wherein
    the ionic organic coloring matter is adsorbed in the first silicate; and

the ionic organic coloring matter is at least one selected from the group consisting of methylene blue, rhodamine B, erythrosine B, tartrazine, sunset yellow FCF and brilliant blue FCF.

9. The silicate-coated body according to claim 8, further comprising:

a multivalent cation,
wherein the ionic organic coloring matter comprises an anionic organic coloring matter; and
wherein the multivalent cation is at least one selected from the group consisting of a magnesium ion, a calcium ion, an aluminum ion and a barium ion.

10. A method for manufacturing a silicate-coated body, comprising:

a mixing step of mixing a raw material which supplies constituent elements of a smectite silicate, a dissolving agent which dissolves at least part of the raw material and a substrate in a solvent to prepare a mixed liquid;
a heating step of heat-treating the mixed liquid; and
a cooling step of cooling the mixed liquid,
wherein the raw material comprises a silica powder,
particles in the silica powder are smaller than the substrate, and
the particles are adherable to a surface of the substrate.

11. The method for manufacturing a silicate-coated body according to claim 10, wherein the silica powder is 0.02 parts by mass to 0.7 parts by mass based on 1 part by mass of the substrate in the mixing step.

12. The method for manufacturing a silicate-coated body according to claim 10 or 11,
wherein the substrate comprises at least one selected from the group consisting of mica, talc, alumina and glass.

13. The method for manufacturing a silicate-coated body according to any one of claims 10 to 1215 to 19, wherein the smectite silicate comprises hectorite.

14. The method for manufacturing a silicate-coated body according to any one of claims 10 to 13,
wherein the raw material comprises a magnesium-containing compound and a lithium-containing compound, and the dissolving agent comprises urea.

15. The method for manufacturing a silicate-coated body according to any one of claims 10 to 14, further comprising:
an addition step of adding the silicate-coated body and an ionic organic coloring matter to an aqueous solvent containing water.

[Fig. 1]

[Fig. 2]

[Fig. 3]

● :silica sol

[Fig. 4]

[Fig. 5]

[Fig. 6]

[Fig. 7]

[Fig. 8]

[Fig. 9]

[Fig. 1 0]

[Fig. 1 1]

[Fig. 1 2]

[Fig. 1 3]

[Fig. 1 4]

[Fig. 1 5]

[Fig. 1 6]

[Fig. 1 7]

[Fig. 18]

[Fig. 1 9]

5.0kV 8.1mm x8.00k SE(U)     5.00um

[Fig. 2 0]

5.0kV 8.1mm x60.0k SE(U)　　　　　　　　500nm

[Fig. 2 1]

2.0kV 7.8mm x4.50k SE(U)      10.0um

[Fig. 2 2]

2.0kV 7.8mm x20.0k SE(U)　　　　　2.00um

[Fig. 2 3]

2.0kV 7.8mm x22.0k SE(U)　　2.00um

[Fig. 2 4]

[Fig. 2 5]

2.0kV 8.0mm x20.0k SE(U)      2.00um

[Fig. 2 6]

2.0kV 8.0mm x30.0k SE(U)      1.00um

[Fig. 2 7]

2.0kV 7.6mm x2.20k SE(U)　　　　　　　20.0um

[Fig. 2 8]

2.0kV 7.7mm x22.0k SE(U)  2.00um

[Fig. 2 9]

2.0kV 7.7mm x60.0k SE(U)          500nm

[Fig. 3 0]

2.0kV 7.9mm x8.00k SE(U)  5.00um

[Fig. 3 1]

[Fig. 3 2]

2.0kV 7.9mm x18.0k SE(U)　　　　3.00um

[Fig. 3 3]

[Fig. 34]

[Fig. 3 5]

[Fig. 3 6]

[Fig. 3 7]

[Fig. 3 8]

0hr        3hr        24hr, Separated Powder

[Fig. 3 9]

10.0μm

[Fig. 4 0]

[Fig. 4 1]

[Fig. 4 2]

[Fig. 4 3]

[Fig. 4 4]

[Fig. 4 5]

[Fig. 4 6]

[Fig. 4 7]

[Fig. 4 8]

[Fig. 4 9]

## INTERNATIONAL SEARCH REPORT

International application No.

PCT/JP2017/020092

| A. CLASSIFICATION OF SUBJECT MATTER |
|---|
| *C01B33/42*(2006.01)i |

According to International Patent Classification (IPC) or to both national classification and IPC

| B. FIELDS SEARCHED |
|---|
| Minimum documentation searched (classification system followed by classification symbols)<br>C01B33/42 |

Documentation searched other than minimum documentation to the extent that such documents are included in the fields searched

| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)
JSTPlus(JDreamIII), JST7580(JDreamIII), JSTChina(JDreamIII)

### C. DOCUMENTS CONSIDERED TO BE RELEVANT

| Category* | Citation of document, with indication, where appropriate, of the relevant passages | Relevant to claim No. |
|---|---|---|
| X<br>A | B. V. DUFFEL et al., Multilayered Clay Films: Atomic Force Microscopy Study and Modeling, Langmuir, 1999, 15, 7520-7529. Abstract, Experimental Section, Results | 1,3<br>2,4-26 |
| X<br>A | WO 2013/073475 A1 (Nagoya Institute of Technology), 23 May 2013 (23.05.2013), paragraph [0023]; examples; claims<br>& US 2014/0287236 A1<br>paragraph [0033]; examples; claims<br>& EP 2781485 A1 | 4,7<br>1-3,5,6,8-26 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>26 June 2017 (26.06.17) | Date of mailing of the international search report<br>11 July 2017 (11.07.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2017/020092

C (Continuation). DOCUMENTS CONSIDERED TO BE RELEVANT

| Category* | Citation of document, with indication, where appropriate, of the relevant passages | Relevant to claim No. |
|---|---|---|
| X<br>A | T. OKADA et al., Effects of fluoride and urea on the crystal growth of a hectorite-like layered silicate on a silica surface, Applied Clay Science, 2016, 132-133, 320-325. Abstract, 2. Experimental, 3. Results and discussion | 4,7-14<br>1-3,5,6,<br>15-26 |
| A | WO 92/003119 A1 (Catalysts & Chemicals Industries Co., Ltd.),<br>05 March 1992 (05.03.1992),<br>entire text<br>& US 2002/0011186 A1<br>whole document<br>& EP 543999 A1          & DE 69130322 C<br>& SG 49806 A            & AT 171974 T | 1-26 |
| A | JP 2010-525125 A (BASF SE),<br>22 July 2010 (22.07.2010),<br>entire text<br>& US 2010/0192802 A1<br>whole document<br>& WO 2008/135383 A1      & EP 2147054 A<br>& CN 101679768 A | 1-26 |
| A | JP 2014-024711 A (Shinshu University),<br>06 February 2014 (06.02.2014),<br>entire text<br>(Family: none) | 1-26 |
| A | JP 2001-302230 A (Topy Industries Ltd.),<br>31 October 2001 (31.10.2001),<br>entire text<br>(Family: none) | 1-26 |

Form PCT/ISA/210 (continuation of second sheet) (January 2015)

EP 3 584 220 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017025466 A
- JP H07505112 A

- JP 2014024711 A

**Non-patent literature cited in the description**

- **TOMOHIKO OKADA et al.** Swellable Microsphere of a Layered Silicate Produced by Using Monodispersed Silica Particles. *J. Phys. Chem. C,* 2012, vol. 116, 21864-21869